# EUROPEAN PATENT SPECIFICATION

(11) **EP 0 378 697 B1**
(45) Date of publication and mention of the grant of the patent: **03.09.1997**
(21) Application number: 89907286.2
(22) Date of filing: 19.06.1989
(51) Int. Cl.: G06F 3/033, G06F 3/14

(54) **MULTI-WINDOW COMMUNICATION SYSTEM**
ÜBERTRAGUNGSSYSTEM MIT MEHREREN BILDAUSSCHNITTEN
SYSTEME DE COMMUNICATION MULTIFENETRE

(30) Priority: 20.06.1988 JP 149975/88; 20.09.1988 JP 233502/88
(43) Date of publication of application: 25.07.1990
(73) Proprietor: FUJITSU LIMITED, Kawasaki-shi, Kanagawa 211 (JP)
(72) Inventor: OBATA, Akihiko, Mitaka-shi,Tokyo 181 (JP); KAMATA, Hajime,201 Daisan-Nakahara Bldg., Nakahara-ku,Kawasaki-shi,Kanagawa 211 (JP); YANO, Katsutoshi, Nerima-ku,Tokyo 178 (JP); ADACHI, Motomitsu, Chigasaki-shi,Kanagawa 253 (JP)
(74) Representative: Lehn, Werner, Dipl.-Ing.
(86) International application number: JP8900611
(87) International publication number: WO8912859

(56) References cited:
- DE-A- 3 520 285
- GB-A- 2 139 042
- US-A- 4 714 918
- IEEE Communications Magazine, Volume 24, No. 7, July 1986, IEEE, (New York, US), K. HASUI et al.: "Man-Machine Interfaces in Office Communication Systems", pages 18-23

## Description

The present invention relates to a multi-window display communication terminal for displaying a plurality of independent rectangular screens (windows) on a display screen, and more particularly to a control apparatus for controlling a multi-window telewriting service using a plurality of variable rectangular windows whose frames can be optionally changed by a user.

Recently, a highly developed communication system has been developed for ISDN. As a basic rate interface between network and terminal, 2B + D (64K + 64K + 16K bps) is determined, and a highly developed communication service has been reviewed to fully utilize the 2B + D interface. In these circumstances, a voice can be transmitted by using one B channel, and multi-media documentary information including text, image data, graphics and hand-drawing data are transmitted by another B channel. A conversation is performed by voice, and underlines or comments are written onto a document displayed on a communication terminal, or a part of a document is designated by a cursor. Audio-graphic conference service has been proposed based on a telewriting (image plotting) service.

On the other hand, it is desired to provide a communication terminal with a multi-window display function. This terminal is adopted, for example, at a work-station, in order to increase its usability. According to a multi-window display, a plurality of rectangular areas of a discretional size are provided on a screen and a part of the image information, such as documentary information, is cut out or displayed. By using this function, a plurality of documents can be displayed simultaneously on a screen. By realizing a multi-media communication service based on the above-recited telewriting on a window, the usability of the system at a communication terminal can be increased. Further, the demand for telewriting based on a document displayed in a plurality of windows, i.e. the demand for a multi-window telewriting is increasing.

In a telewriting service, the document first referred to is transmitted to another terminal in a batch and displayed. Then, by using a pointing device such as an input-pen, a communication is conducted by voice with the other party and a telewriting service is conducted on the displays at both terminals. Handwriting data is sequentially transmitted between them and is displayed on the original screen as well as at the receiving terminal.

Where a multi-media communication is conducted using a telewriting image communication terminal, operation of terminals becomes relatively complicated and it is preferable that the operation output is suitable for the ability of each user and the design of object-oriented software is conducted for this purpose to satisfy a human interface with an unskilled user.

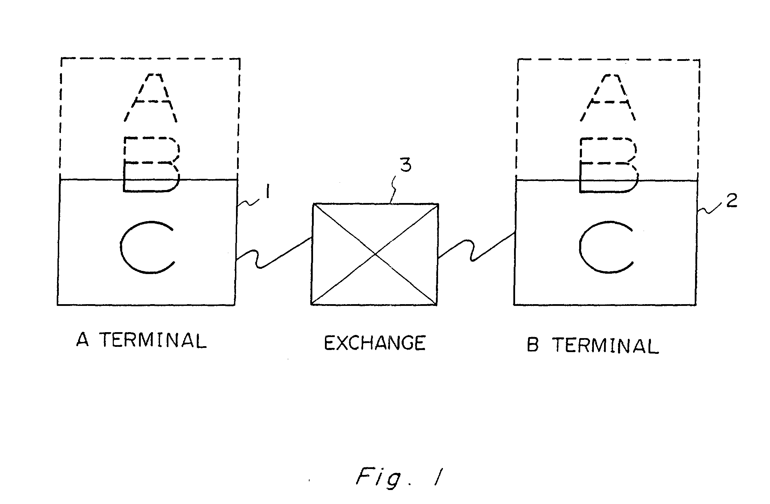

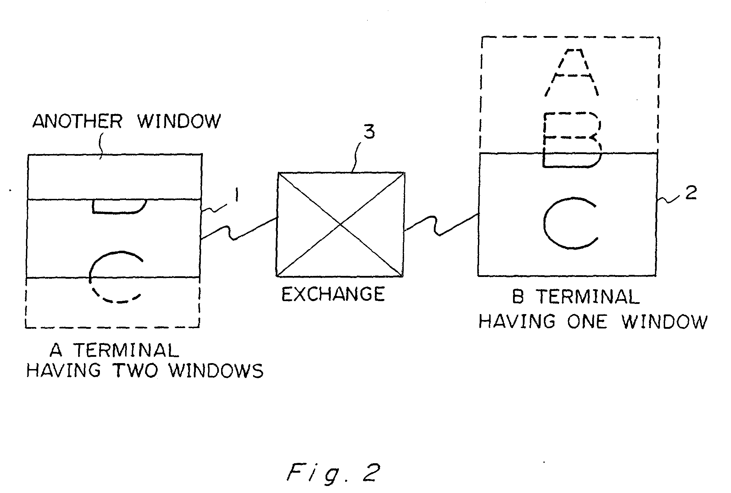

A conventional processing communication system is shown in Fig. 1. 1 and 2 are telewriting terminals and 3 is an exchange apparatus. A and B terminals at 1 and 2, respectively, have bit map displays of 640 x 400 dots, for example, as their display apparatuses. Generally speaking, a display screen is too small for a practical telewriting service. Therefore, a virtual screen as shown in the Fig. 1 is considered. This screen is several times larger than the actual display screen, and is equal to the size of the document to be displayed. A part of the virtual screen is displayed on the actual screen and the portion to be displayed is scrolled up and down, right and left by operating a scroll button with an input-pen. When scrolling is conducted, the displayed portion of the document is made the same at both terminals. When one terminal is scrolled, it transmits a scroll request to the other terminal which, upon receiving the scroll request, performs the same amount of scrolling as the originating terminal. When the above service is to be carried out by using a multi-window system, the user may discretionally change the size of his window, making it different from that of the other terminal. In the case shown in Fig. 2, when the window of A terminal 1 is scrolled, the end of the document is already reached in a window of B terminal 2, so that no further scrolling is possible. Thus, it is not sufficient merely to send a scroll request to the other party. Namely, when the window of the other communication party cannot be scrolled any more, a complicated set of controls becomes necessary to handle the situation.

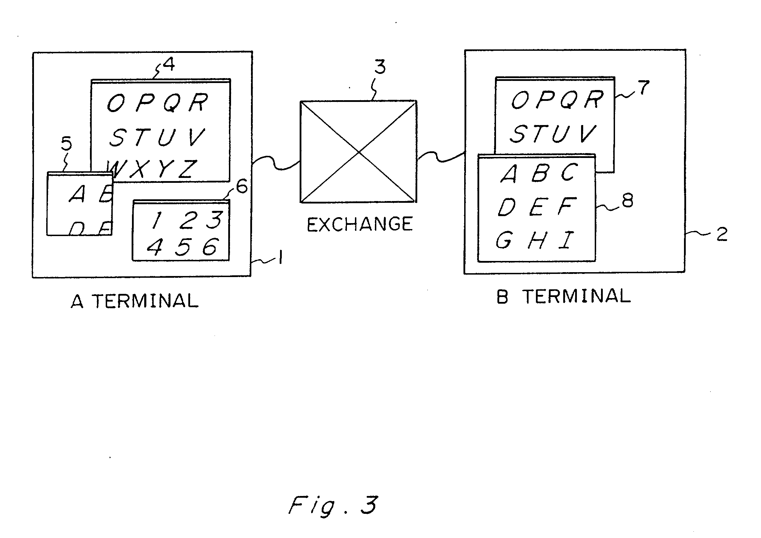

There may be document which one party doesn't want to show to the other party because of its secret nature, but wants to refer to during a meeting without showing it to the other party. Therefore it is necessary to see a document locally, to perform a local window function and to transmit document data in a batch to enable the other party to decide whether a window function should be conducted during communication. It is preferable to provide a multi-window telewriting system in which two such window functions are realized. Fig. 3, shows an example in which windows 4 and 7, and windows 5 and 8 are used for communication and window 6 is used locally between A terminal 1 and B terminal 2. In this case, the status of the windows of both terminals differs. Therefore the method of managing the windows during communication between the two terminals is important.

As relevant arts of the present invention, the following publications are presented. Japanese Laid Open Patent Disclosure (KOKAI), 63-291111 relates to an operation guidance output control system and discloses a structure of a telewriting terminal.

Japanese Laid Open Patent Disclosure (KOKAI), 63-67958 relates to a multi-window telewriting terminal and discloses a technology of detecting a size of a window and an area of a display of the other terminal by marking a frame of display screen of a telewriting terminal.

IEEE Communications Magazine, volume 24, no. 7, July 1986, IEEE, (New York, US), K. Hasui et al., "Man-Machine Interfaces in Office Communication Systems", pages 18-23, discloses a new man-machine interface called "Imagephone", which, by means of advanced multi-media communication networks comprising integrated PBX's and LAN's with various application processors, combines the man-machine interface of Imagephone with multi-media communication functions. With this system, it is possible, for example, for one user to retrieve a document from a database, transmit it to another user and for both to converse while looking at, marking and annotating (text or graphics), the document displayed on a screen. Windows overlapping the original are available for displaying additional information. Both users' displays of the document in question are the same. Display management and control are done mainly by hardware. One document can be overlaid on another by using the multi-window control. The window size and location can be changed as desired and can be scrolled both vertically and horizontally to view material twice the size of the display.

DE-A-3 520 285 relates to a dialogue computer system in which independent information from separate source terminals are simultaneously displayed in respective windows displayed in a common display screen, thereby enabling many dialogue meetings to be held by a single user.

An object of the present invention, as claimed, is to enable smooth telewriting in which a part of a multi-window is used exclusively for a local window for displaying a document at the home terminal and other one(s) of the plurality of windows can be used for a telewriting service with the other party.

According to the invention from one aspect there is provided a multiwindow communication system, in which first and second terminals are arranged to perform communication, each terminal comprising inputting means for inputting function execution commands, control means for analyzing and executing a command input by said inputting means and a command transmitted from a remote terminal to a local terminal, display means for displaying a plurality of windows including a communication window used for telecommunication between the first and second terminals and a local window used only in the first terminal, under the control of said control means transmitting and receiving means for transmitting and receiving information associated with said communication window between the first and second terminals, under the control of said control means, and window management means for managing a window using the information received from the remote terminal by said transmitting and receiving means, wherein said transmitting and receiving means of the local terminal is arranged to transmit a request to the second terminal to start telecommunication, thereby performing a telecommunication between the communication windows of the first and second terminals.

Another object of the present invention is to provide a variable-frame-window communication terminal for easily carrying out smooth screen scrolling even when a communication is conducted with a terminal having a different window size from that of the home terminal.

According to the invention from another aspect there is provided a method of controlling a window screen scrolling in communication between a first and second terminal, comprising the steps of: providing the first terminal with a first scrolling confirming flag, the first scrolling confirming flag being set "on" when a possibility of scrolling a screen in the first terminal is being examined and providing the second terminal with a second scrolling confirming flag, the second scrolling confirming flag being set "on" when a possibility of scrolling a screen in the second terminal is being examined, judging, at the first terminal, whether or not a scrolling of a screen in the first terminal is possible, when receiving a request of simultaneous scrolling of screens in the first and second terminals at the first terminal and turning on the first scrolling confirming flag and transmitting a scrolling confirmation request from the first terminal to the second terminal, judging, at the second terminal, the content of the second scrolling confirming flag, when receiving the scrolling confirmation request, returning a "scrolling impossible" signal from the second terminal to the first terminal when the second scrolling confirming flag is on, judging, at the second terminal, whether or not a scrolling of the window in the second terminal is possible, when the second scrolling confirming flag is off, returning a "scrolling impossible" signal from the second terminal to the first terminal when the scrolling in the second terminal is judged to be impossible, performing, in the second terminal, scrolling of a screen when the scrolling in the second terminal is judged to be possible, returning a "scrolling possible" signal from the second terminal to the first terminal when the scrolling in the second terminal is judged to be possible, and performing, in the first terminal, a scrolling of the screen.

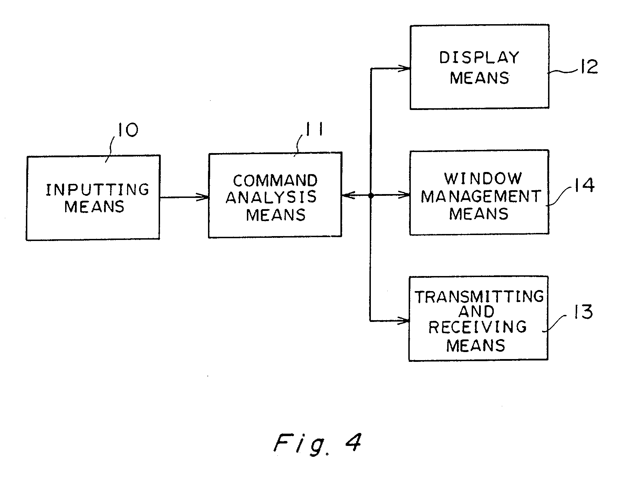

Fig. 4 is a principle block diagram of the present invention. In the drawing, input means 10 of the multi-window communication terminal comprises, for example, an input-pen, a tablet or a key-board. Input means 10 receives change-of-window-frame, screen-scrolling and various function-designating commands which are input by a user. Command analyzing means 11 comprises, for example, a processor, which analyzes an input command and a command transmitted from the other terminal and carries it out.

Display means 12 comprises, for example, a display apparatus CRT. A window display data stored in a window memory is displayed on a screen of the display by a control of the command analysis means.

Transmitting and receiving means 13 transmits and receives signals such as a window screen scroll confirmation request to and from the other terminal. Window management means 14 maintains a window management data such as vertical width and horizontal width of respective window frames in RAM and performs a window frame change and a window scroll, under control of command analysis means 11.

In a terminal of Fig. 4, input means 10 can receive a command of a plurality of window displays from a user and can receive a telewriting service command in case where it is used as a telewriting terminal. In these terminals, in addition to a function of displaying a window display data stored in a window memory in a communication window used for a communication with the other terminal, the display means 12 can display the window display data in a local window which is used for a reference by only the terminal. The display is not limited to a communication window and a local window and the window display data may be displayed in a plurality of windows.

Next, in these terminals, transmitting and receiving means 13 can transmit and receive signals for controlling a plurality of windows, signals designating a window used for the home terminal by a window number or memory address, the number of the window for telewriting image communication and the picture information to and from the other terminal.

In window management means 14 in these terminals can execute a window frame change, window screen scroll control independently from another window with regard to a plurality of windows and change a window frame to a discretional size within a vertical and horizontal width of the document and can perform scroll of a window screen in any one of upper, lower, right and left directions. Transmitting and receiving means 13 can manage a window by using the number of the communication window received from the other terminal and the picture information.

Method of managing a multi-window in a communication between two image telewriting terminals A and B is explained by referring to Fig. 4. For example, an user of A terminal 1 touches an icon for requesting a start of telewriting service on a display by using input means 10 such as an input-pen and designates a window for telewriting service. Then, the window number is analyzed by command analyzing unit 11, and telewriting request command is transmitted to B terminal 2 by transmitting and receiving means 13.

When B terminal 2 receives this command, it hunts an unused window, based on the content of window managing means 14, and returns the window number or the memory address of B terminal 2 to A terminal 1, thereby enabling the connection between the two windows to be set up. Upon the connection being set up, A terminal 1 transmits, the document data of its communication window and displays it on display means 12 on B terminal 2. Thereafter, users at both terminals perform telewriting and respective users sequentially transmit handwriting data to the other party. The handwriting data is input by an input-pen on a tablet on the display.

If necessary, the users at both terminals can also use another windows for telewriting service. In this case, the terminals inform each other of the appropriate communication window numbers, and a telewriting service is then conducted. Namely, different windows for performing communication are hunted but this hunting is conducted independently of a request for start of telewriting.

As described above, to enable to do telewriting service they must inform each other of the window number or the memory address to be used for the communication between the windows. A discretional number of the multi-windows are used for a communication with the other party and the remaining window can be used as a local window.

Fig. 4 shows a method of scrolling a window screen between the originating terminal and the destination terminal in a communication net-work in which a plurality of communication terminals or multi-window telewriting images are combined. In the present invention a scroll confirmation request is transmitted before screen scrolling is conducted. But a flag showing that the scrolling is now being confirmed is maintained in a window managing means 14. Window managing data is produced simultaneously by both terminals to avoid a collision between the confirmation requests.

In Fig. 4, the user of A terminal 1 provides a scroll command to input means 10 and this command is analyzed by command analyzing unit 11. The window managing means determines, in accordance with the contents of said command analyzing unit 11, whether command analyzing unit 11 can scroll the window of the terminal. Window managing means 14 decides from the window managing data, whether or not a scrolling is possible. If it is, this is displayed to a user as a guidance display by display means 12. When it is judged that scrolling is possible, window managing means 14 turns on a scroll confirming flag, and transmitting and receiving means 13 provides a scrolling confirmation request. When B terminal 2 receives this confirmation demand, window managing means 14 determines, based on whether or not a scrolling confirmation flag is turned on, whether or not B terminal 2 should produce a prior scroll confirmation request. When the flag is turned on, this means that a collision of a scroll confirmation request occurs. Scroll-impossible data is provided to the A terminal 1 by transmitting and receiving means 13.

When the scroll confirming flag of B terminal 2 is off, window managing means 14 judges whether or not scrolling of the window at B terminal 2 is possible. If scrolling is impossible, a scroll-impossible message is sent to A terminal 1 as is similar to the above recitation.

When the window of B terminal 2 can perform a scrolling, display means 12 performs a scrolling of a window screen and transmitting and receiving means 13 replies simultaneously to A terminal 1 that scrolling is possible and A terminal 1 also performs screen scrolling on display means 12. The scrolling method of the present invention can be applied to a communication terminal having a single variable frame window function as well as a multi-window function communication terminal.

As described above, the present invention determines, before a window scrolling is carried out, whether or not a scrolling at the other terminal is possible.

Window management means 14 can judge whether or not window screen scroll is possible in accordance with scroll in a vertical or horizontal directions at any of the lowest limit, the upper limit, the left end, and the right end of the window screen.

### Brief Description of the Drawings

Fig. 1 shows a prior art telewriting service system,
Fig. 2 shows an example of a screen scrolling when the window sizes are different,
Fig. 3 is a block diagram of a multi-window telewriting system to which the present invention applies,
Fig. 4 is a principle block diagram of the present invention,
Fig. 5 is a block diagram of an embodiment comprising a multi-window telewriting terminal,
Fig. 6 shows the structure of one embodiment of a display,
Fig. 7 is a view for explaining the scope of a document display in the window area,
Fig. 8 shows the window management data,
Fig. 9 shows a sequence of screen displays corresponding to an embodiment of a multi-window telewriting service,
Fig. 10 shows a sequence of steps for multi-window telewriting service,
Fig. 11 shows a sequence of steps for producing a voice call,
Fig. 12 shows a sequence of steps for producing a data call,
Fig. 13 shows a sequence of steps for executing a document transfer,
Fig. 14 shows the format of telewriting service command,
Fig. 15 is a view for explaining a method of scrolling a window screen,
Fig. 16 shows a sequence of steps for designating a scrolling control,
Fig. 17 shows a sequence of steps for designating a collision of scrolling confirmation requests,
Fig. 18 shows an operational flow chart of a command analysis means and a window management means,
Figs. 19A to 19C show operational flow charts of the window management means,
Figs. 20A to 20C show operational flow charts of the window management means,
Fig. 21 shows the initial screen configuration of the terminal,
Fig. 22 shows a screen of a transmitting terminal,
Fig. 23A to 23D show screens of a receiving terminal,
Fig. 24A to 24F show the statuses of the window memory and transient window management tables in accordance with the display, and
Fig. 25A to 25F show the window management tables in communication, using the memory address as a parameter.

### Preferred Embodiment

An embodiment of the present invention will be explained in detail by referring to the drawings.

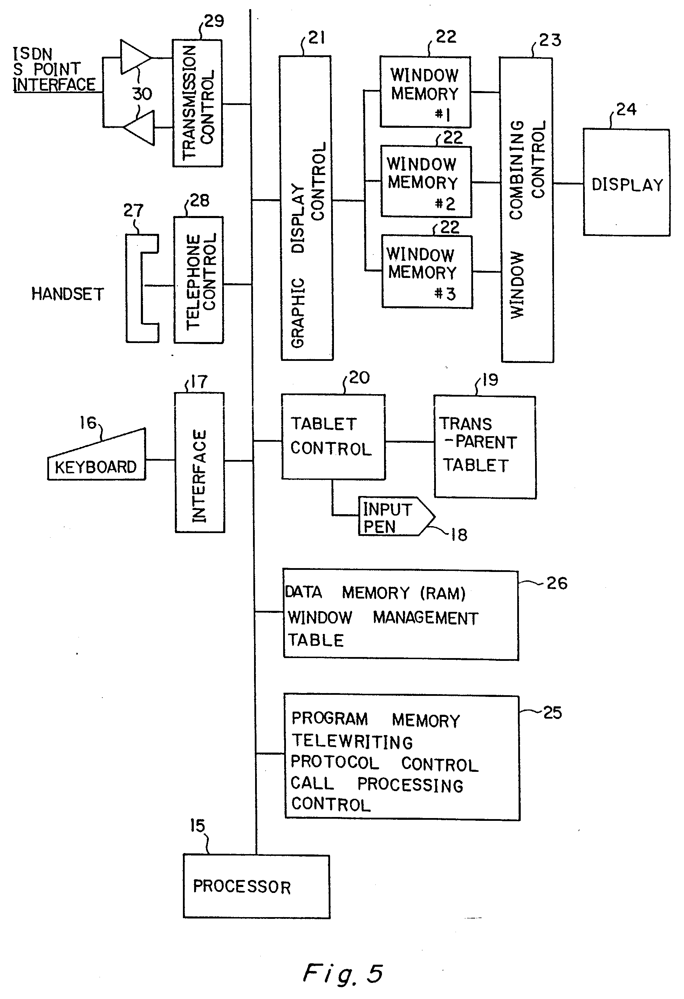

Fig. 5 shows a block diagram of an embodiment of a multi-window telewriting terminal according to the present invention. This terminal comprises a processor 15, a key-board 16 and its interface 17, an input-pen 18 for inputting hand-drawing data, a transparent tablet 19, a tablet control unit 20, a graphic display control unit 21 for performing a display control on a display, a plurality of window memories (#1, #2,...) 22 for storing hand-drawing data of respective windows among a multi-window, a window synthesizing control unit 23 for synthesizing the contents of a plurality of window memories, a display 24, a program memory (ROM) 25 for storing a program such as a telewriting protocol control and a calling processing control, a data memory (RAM) 26 including a window managing table as described later, for example, a hand-set 27 for voice communication, a telephone control means 28, a transmission control means 29 for controlling a data transmission, and a ISDN-point interface 30.

Display 24 comprises a liquid crystal display panel, an EL display panel, or a plasma display panel, and displays the contents of window memory 22. A transparent tablet 19 is provided on the display surface and contents of a display can be see through a transparent tablet 19. By contacting input-pen 18 onto the transparent tablet, an input can be conducted in accordance with a display content. A hand-drawing data is transmitted to the other terminal through transmission control means 29 and is also displayed on the display portion of the other terminal.

As described above, an exclusive window memory 22 is provided to each window of the multi-window, so that a telewriting can be simultaneously conducted for a plurality of windows. Thus, software processing cannot catch up with the telewriting of a superimposition of the several windows upon display, and is controlled by window combining control unit 23 in a hardware manner.

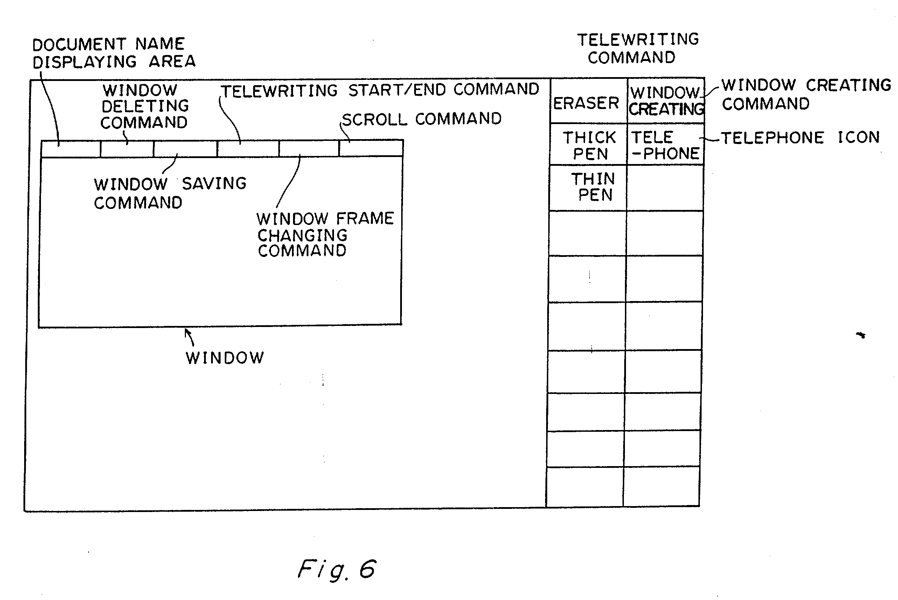

Fig. 6 shows a structure of an embodiment of display 24. On the right side of the display, window producing command, various icon such as telephone, icon for command for various telewriting such as eraser, thick pen, and thin pen are provided. On the upper most portion of the window display area, the document name is displayed and various icons, for example, for the input of the command for deleting a window are provided for instructing the document.

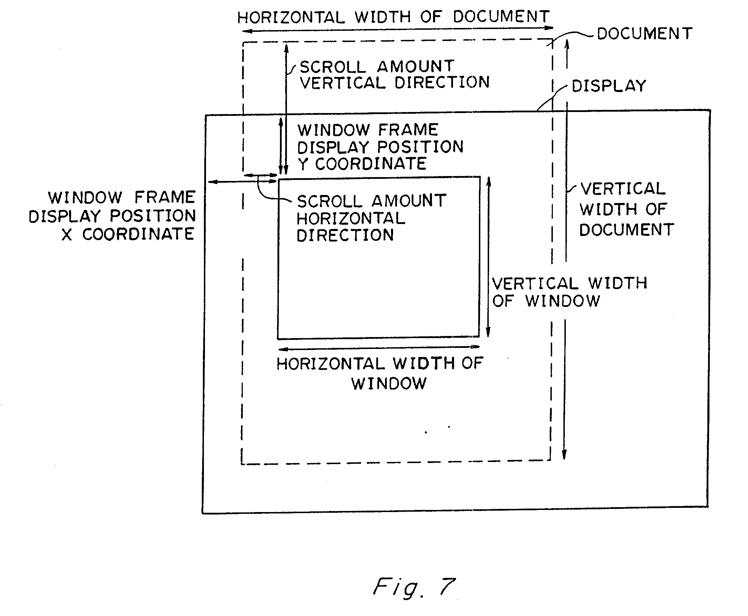

Fig. 7 shows a relation between a document in an virtual space and a display scope of a document in a window area on an actual display. In Fig. 7, a point designated by a scroll amount (in a vertical and horizontal direction) on a document is designated at an upper left point and the sco.pe of a vertical and horizontal width of the window is designated as being a window frame displaying position (X, Y coordinate) of a display on an upper left point. A window display priority is designated with regard to respective windows when the windows are overlapped.

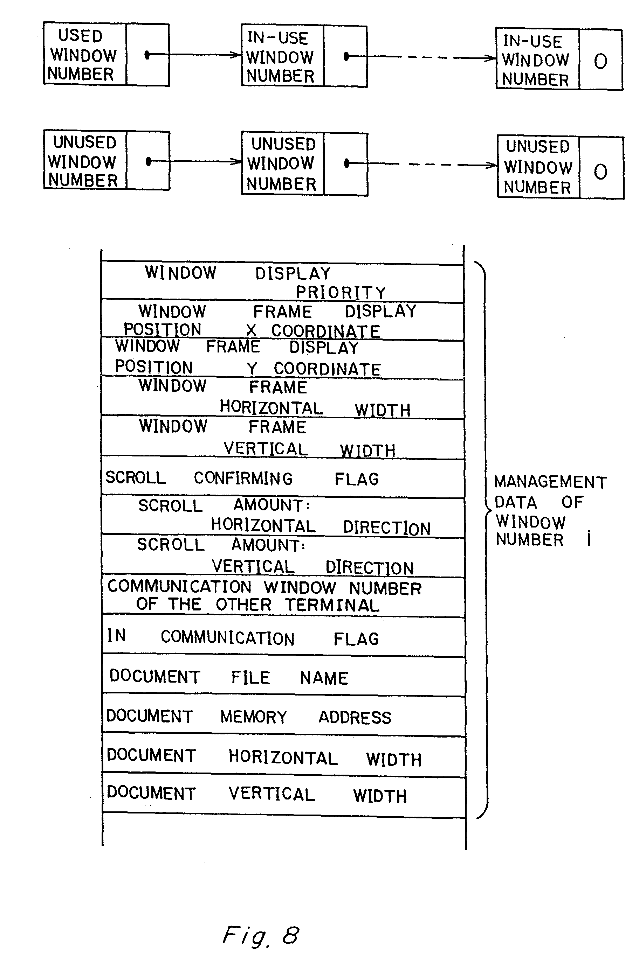

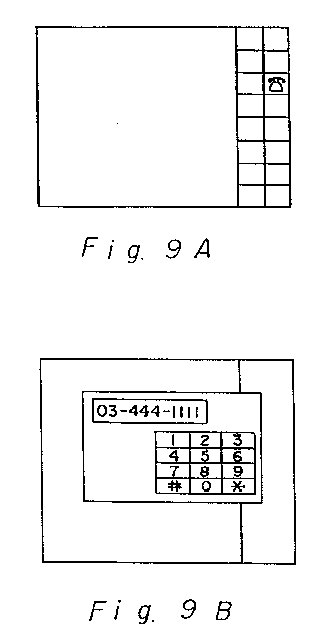

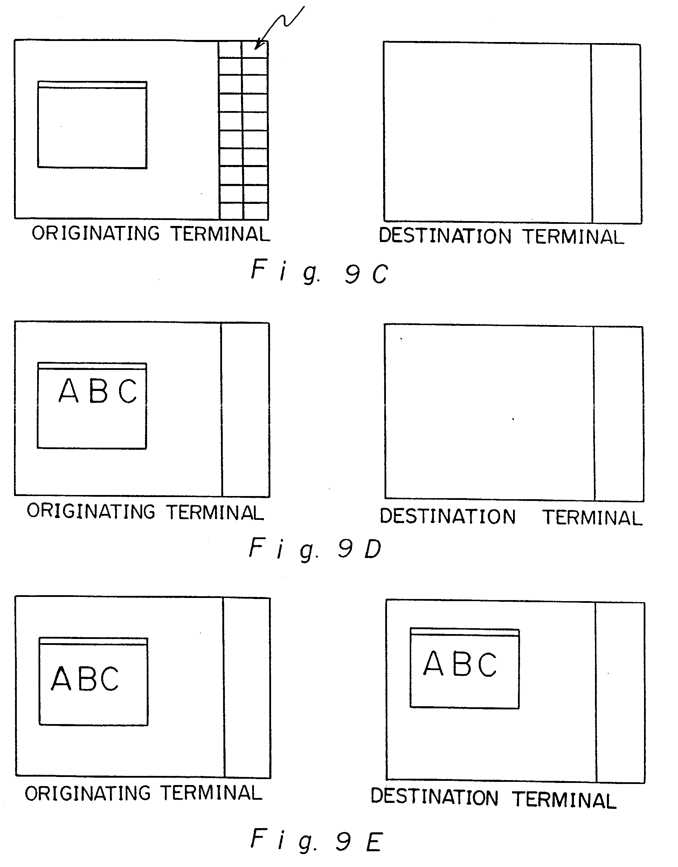

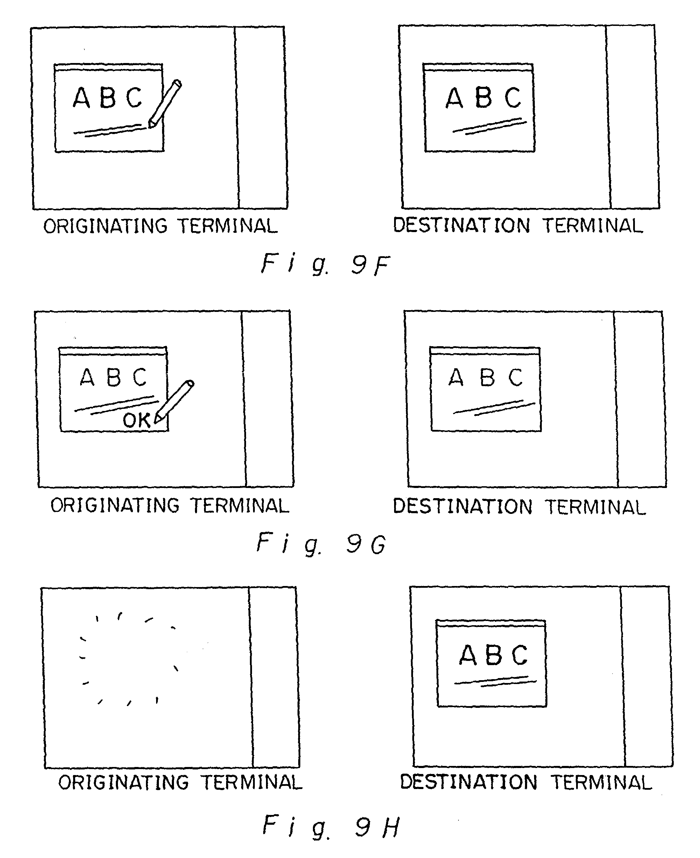

Fig. 8 shows a contents of window management data maintained in window management means 14. First of all, a list of window number designating windows that are in use and window numbers designating windows that are not yet in use is stored, for windows of a multi-window. Data for respective windows comprises window display priority, frame display position (X, Y coordinate), horizontal width and vertical width of the frame, flag for designating that the scroll is being confirmed, amount of screen scroll in a horizontal direction and vertical direction, the window number of a terminal of the other party for communication, flag for designating whether this window is in communication or not, file name of a document, and the address and vertical and horizontal width of the document. In multi-window display, these data are maintained for respective windows. Fig. 9 shows a screen sequence in an embodiment of a multi-window telewriting service. In Fig. 9A, a user presses a telephone icon. In Fig. 9B, he dials the telephone number of an opposite party to get into a communication state with him. In Fig. 9C, the user opens a window on his own terminal by pressing a window-creating icon. In Fig. 9D, a document is written on the window, and in Fig. 9E, an icon for a command designating a start of telewriting is pressed to create a window on the other terminal and communication between windows is established.

In Fig. 9F, hand-drawing data on the window is displayed at both terminals. In Fig. 9G, when the user inputs a command for completing a telewriting service using the window, the window enters a local state and the hand-drawing data at one terminal is not transmitted to the other terminal. In Fig. 9H, a command for designating a window cancellation or a window save is input, and then the window is deleted from the display.

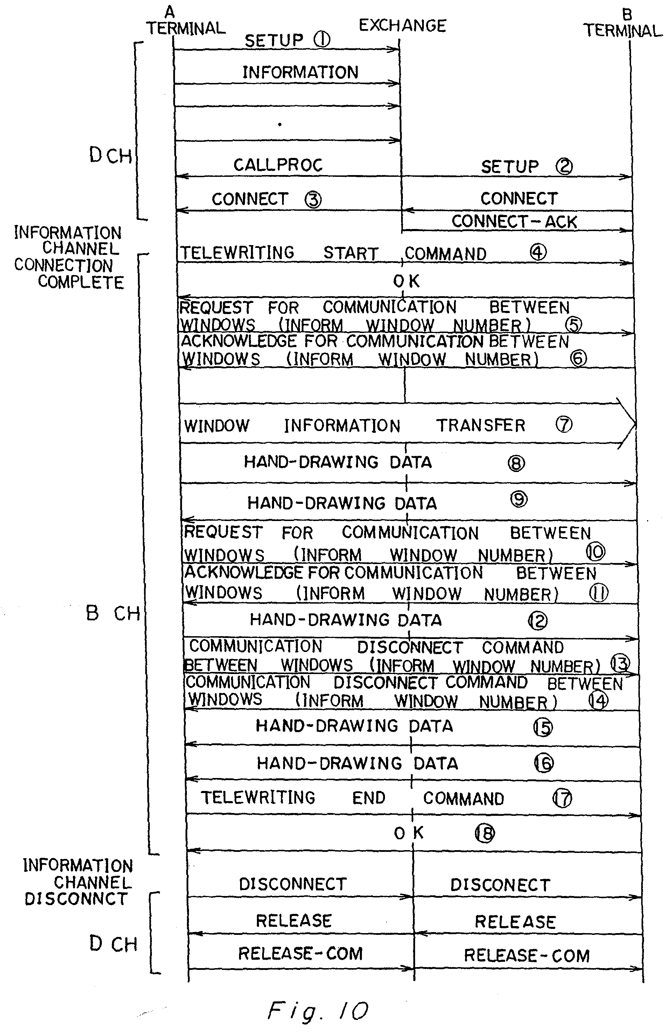

Fig. 10 shows an embodiment comprising a sequence of connecting terminals in which a telewriting is conducted between telewriting communication terminals as shown in Fig. 5.

In Fig. 10 a telewriting starts from an A terminal, for example, and set up ① is transmitted to an exchange from the A terminal via D-channel DCH. This reaches the B terminal as set up signal ②, and connect ③ is transmitted from the B terminal to the A terminal as a response, thereby completing connection of information channel.

Telewriting is carried out sequentially by B channel. When a telewriting starts, request ④ is transmitted from the A terminal to the B terminal by pressing, for example, a telewriting button. Request ⑤ for communication between windows to which the number of the communication window, for example W1, is attached, is transmitted. In response to this, the B terminal produces an acknowledge ⑥ of a communication between windows, and a communication window number, for example W3, at the B terminal is transmitted to the A terminal. Then the data on the window W1, namely, bit map data, is transmitted to the B terminal as window information, through a batch transmission ⑦ and hand-drawing data ⑧ and ⑨ are transmitted between the terminals by a telewriting method. If it becomes necessary to use a different window for a communication during telewriting, the A terminal again transmits a request for communication between windows 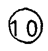 to the B terminal and the window number, for example, W2, used for the A terminal is informed. In response to this, the B terminal informs the A terminal of the window number in use, for example, W4, at 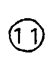 and thereafter the hand-drawing data 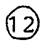 is transmitted from the A terminal.

When a communication using a certain window is stopped during the telewriting, request 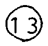 for disconnecting a communication directed to a window W1 of the A terminal is transmitted from the A terminal to the B terminal. The B terminal returns the acknowledge for disconnecting the communication 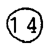 directed to the B terminal, the window W3 being in communication with the window W1 of the A terminal.

On the other hand, window W2 of the A terminal is in communication with window W4 of the B terminal as the A terminals and B terminals get in communication with each other as shown in 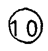 and 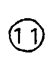 . Therefore, hand-drawing data 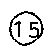 and 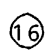 is transmitted from the B terminal and telewriting continues.

When telewriting is completed, the request for completion 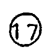 is transmitted from the A terminal and the B terminal transmits the response 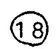 thereby completing the telewriting. Thereafter, D-channel DCH disconnects and releases the line between the A terminal and the exchange apparatus and the exchange and the B terminal.

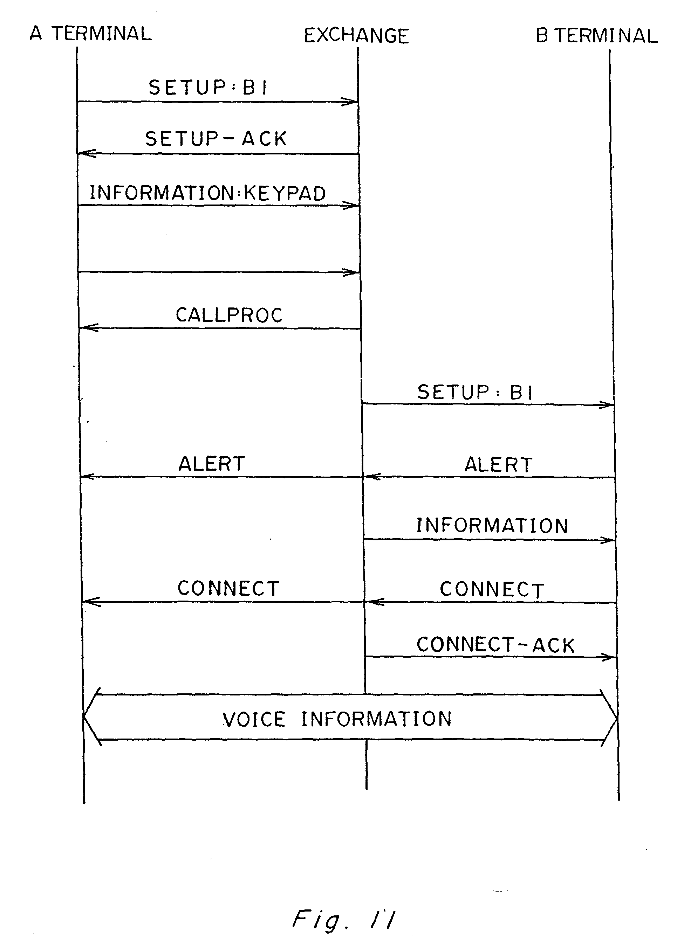

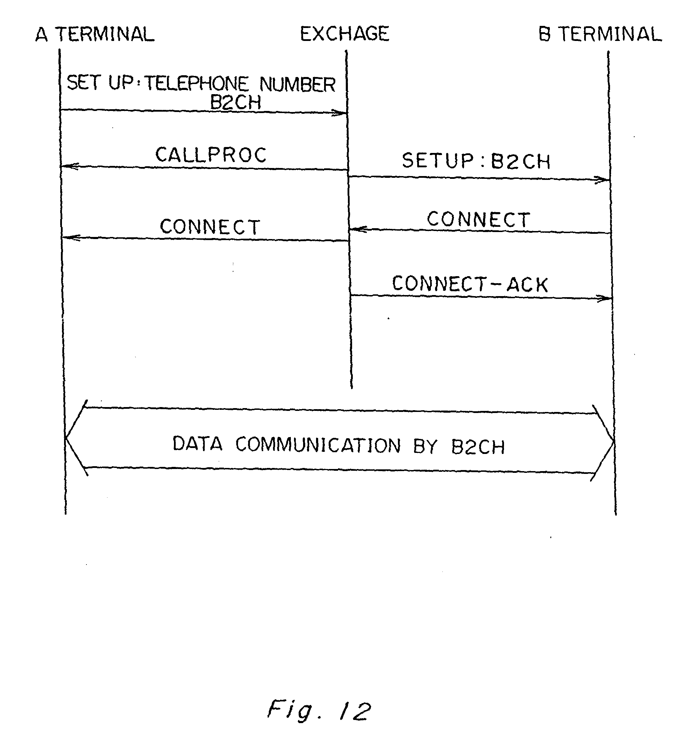

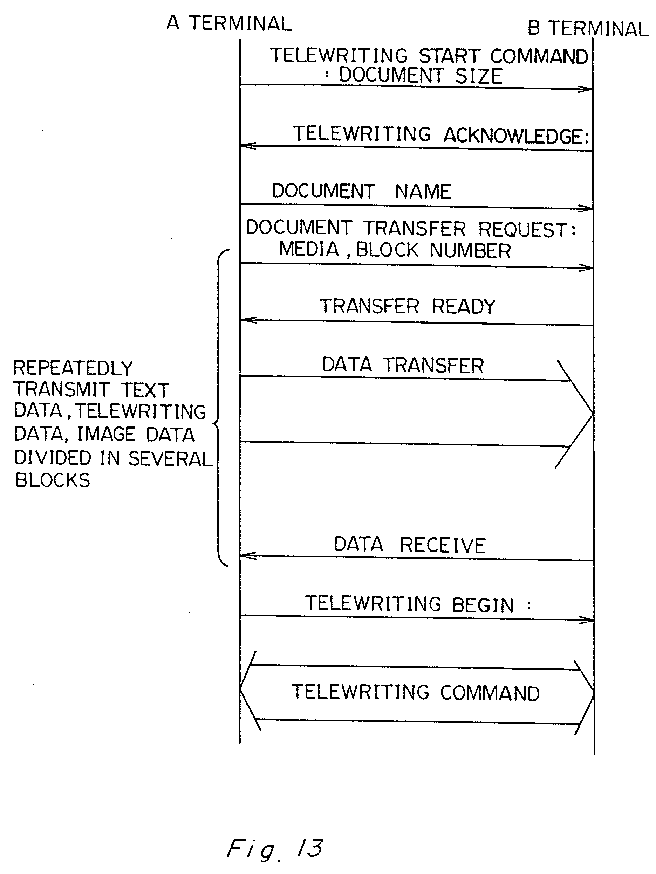

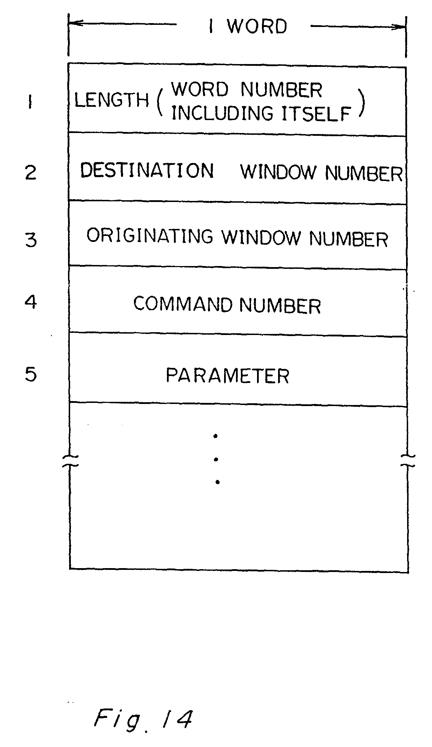

Users at the A terminal and B terminal get into a communication state in accordance with the sequences shown in 1 to 3 in Fig. 10. The embodiment of the calling sequence at this time is shown in Fig. 11. Thereafter, the user of the A terminal transmits the document prepared by him to the user of the B terminal at 7 in Fig. 10 after he presses a start icon for a telewriting. At this time, the connection sequence of the B2 channel is shown in Fig. 12 and the sequence for transmitting the document is shown in Fig. 13. A frame format for obtaining the data in B2 channel is shown in Fig. 14.

In Fig. 13, it is supposed that the document is transmitted from the A terminal. After the B terminal inputs a receipt of a telewriting, the A terminal outputs a transfer of the document name and the request to transmit the document. In response to this, the B terminal informs the A terminal of a completion of a transfer of text. Hand-drawing data, text, and image data are divided into a number of blocks and transmitted continuously. After the A terminal receives a signal acknowledging receipt of data from the B terminal, actual telewriting starts.

In Fig. 14, it is supposed that the window number of the terminal and the window number of the other terminal are given a transmission format by a window management data retained in a window management means 14. When a telewriting request command is transmitted, "0" is inserted to the transfer format as the window number of the other party is not yet identified. When a telewriting acknowledge command is received from the other party his window' number is identified. This is retained as window management data in the window management means 14, and is used for the following window communication.

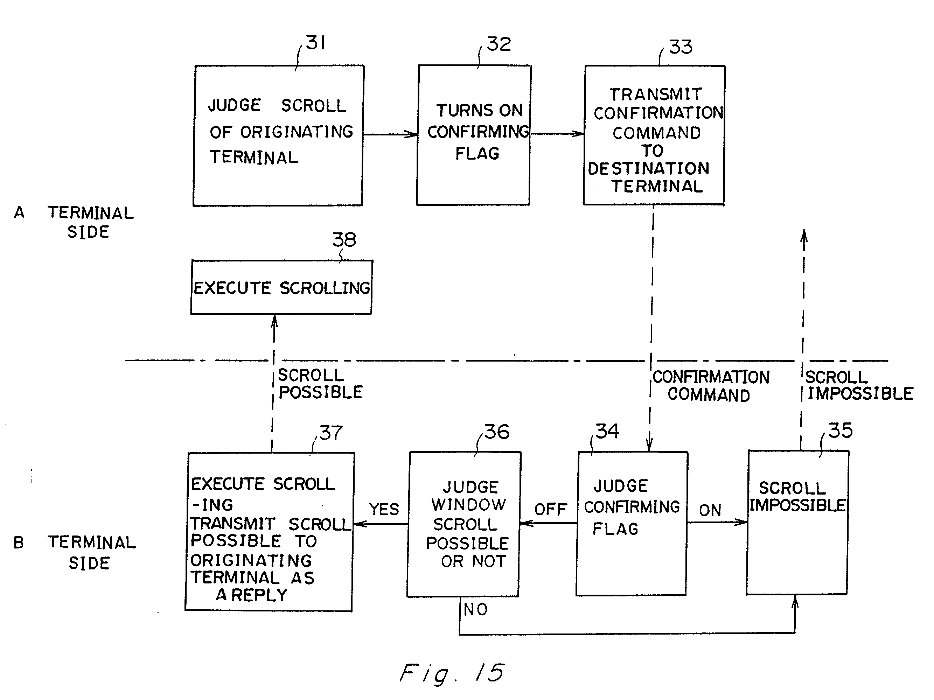

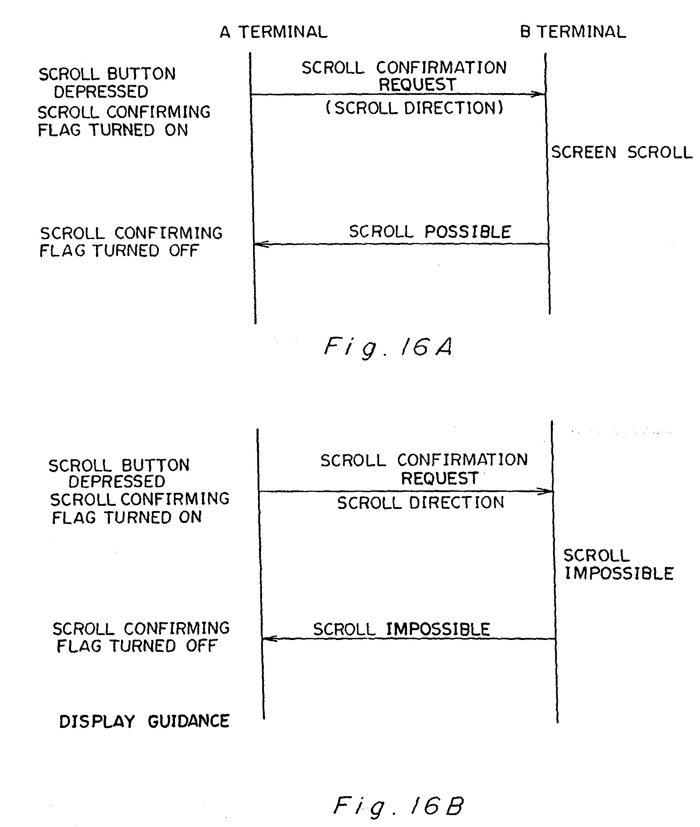

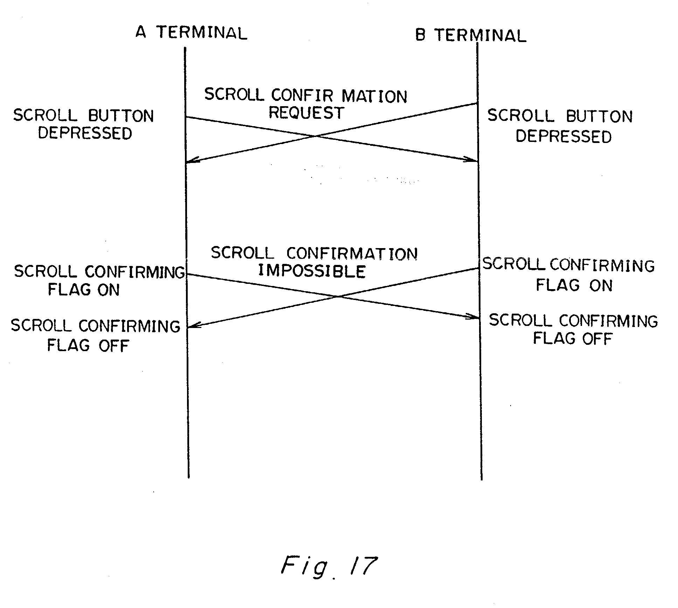

Where, a telewriting terminal as shown in Fig. 5 can display a window whose size or frame can be changed optionally, it is generally called a multi-window. In this case a window screen scrolling method is considered for communication between terminals. The scrolling method is shown in the block diagram in Fig. 15. A sequence of a scroll control is shown in Fig. 16. A collision of a scroll confirmation request is shown in Fig. 17.

In Fig. 15, it is supposed that the request for the screen scrolling is produced by the A terminal side as is similar to the above explanation. Block 31 on the A terminal side determines whether or not the terminal can perform a window scrolling. If the decision is YES, a flag showing that scrolling is confirmed is turned on at 32 and the scrolling confirmation request is transmitted to the B terminal side at 33.

On the B terminal side, a flag showing that scrolling of the terminal is confirmed is turned off at 34 and it is judged at 36 whether or not window scrolling being conducted. Thereafter, scrolling is carried out at 37 and a reply stating that scrolling can be conducted is transmitted to the A terminal. The A terminal receives this reply and turns off the flag showing that scrolling is being confirmed, and executes scrolling at 38. This corresponds to the sequence of Fig. 16A.

When a scrolling confirmation flag is turned on at 34 on the B terminal side, as shown in Fig. 15, the scrolling confirmation request is produced by the B terminal and a scrolling impossible reply is sent to the A terminal at 35. When scrolling is impossible, as shown at block 36, a scrolling impossible reply is similarly sent to the A terminal.

Fig. 16B shows this sequence. The A terminal side turns off the scrolling confirming flag, receipt of the scrolling impossible reply and performs a guidance display showing that scrolling is impossible.

Fig.17 shows the sequence that results when the scrolling buttons at both A and B terminals are depressed simultaneously. Upon depression of the scrolling buttons, the scrolling confirmation flags of both terminals are turned on, and a scrolling-impossible reply is sent to both terminals in response to a request for confirmation. Therefore, the scrolling confirmation flags of both terminals are turned off.

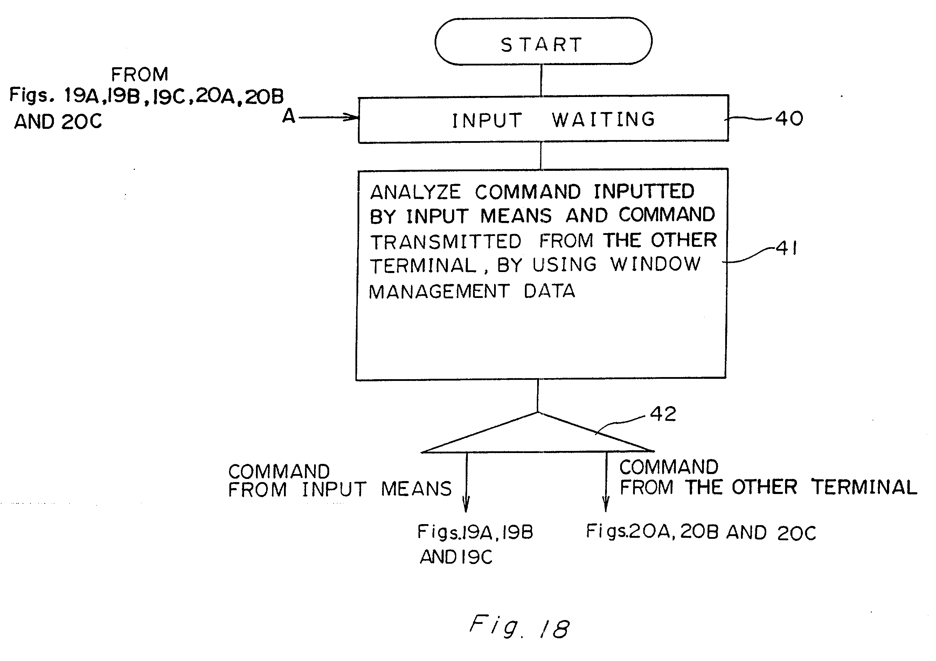

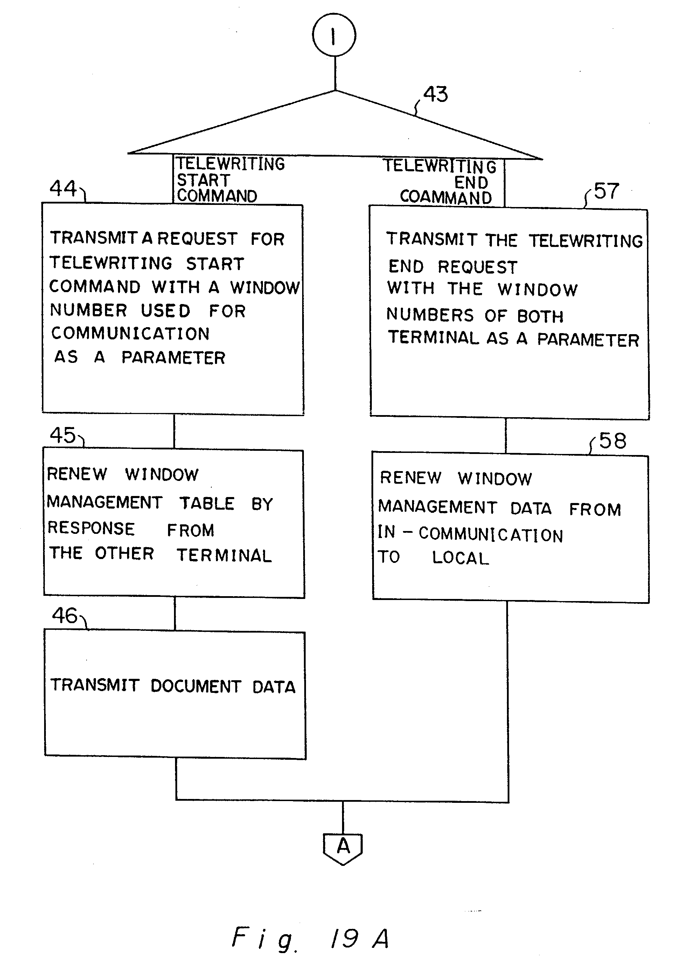

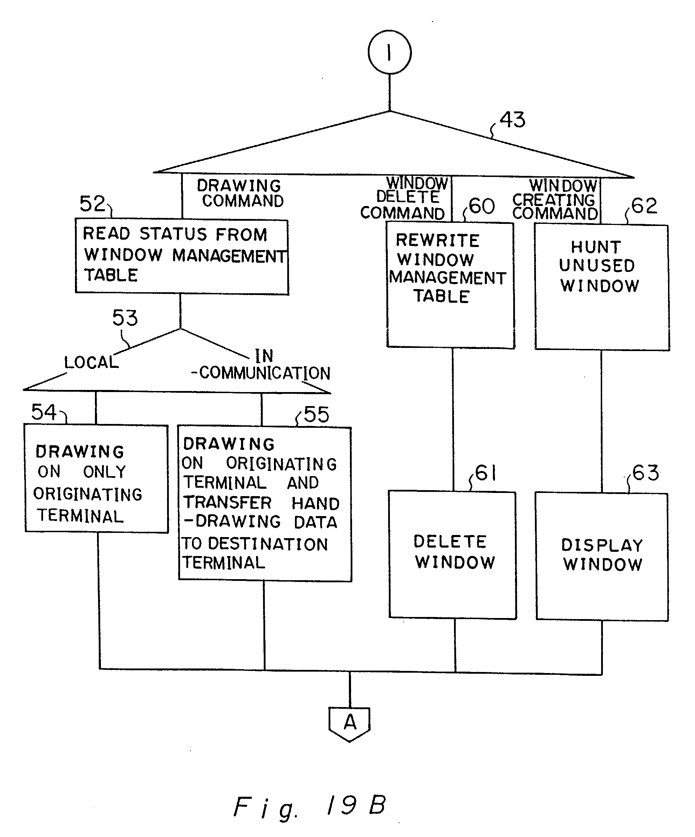

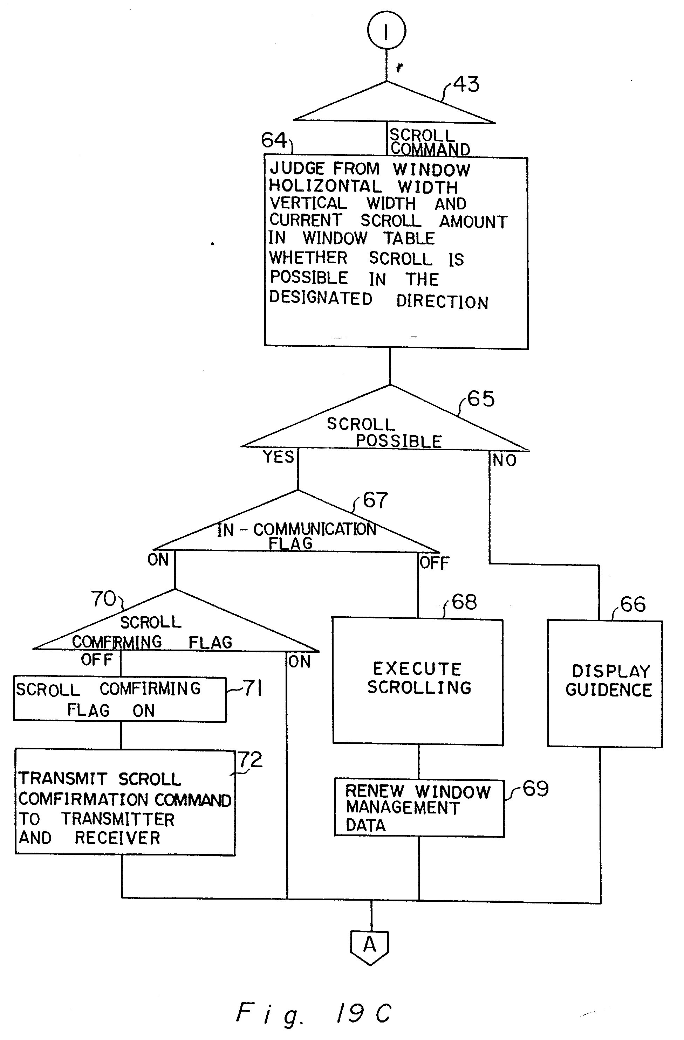

Fig. 18 shows an operational flow chart of command analyzing means 11. As stated above, command analyzing means 11 analyzes the content of the command input by an input means 10, such as an input pen 18, and the command received from the other terminal through transmitting and receiving means 13. When the input is entered at step 40, the command analysis is conducted at step 41 and the window management data shown in Fig. 8. At step 42, the command from the input means is distinguished from the command from the other terminal and both of them are sent to window management means 14.

Figs. 19 to 20 show an operational flow chart of window management means 14. Window management means 14 controls scrolling and manages the window status in response to a user command input from input means 10 and a command input from the other terminal through transmitting and receiving means 13.

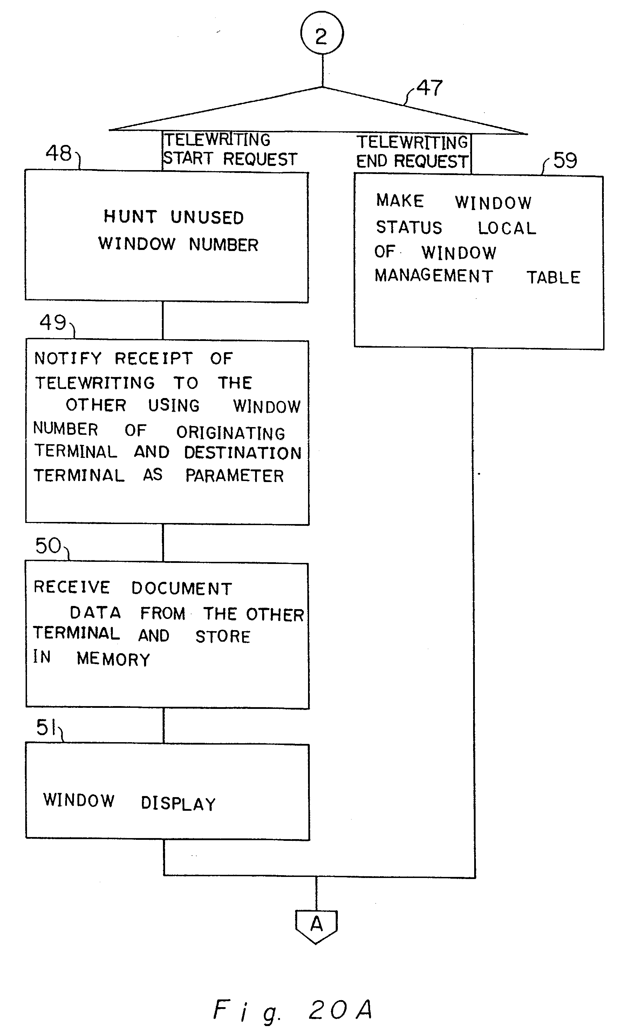

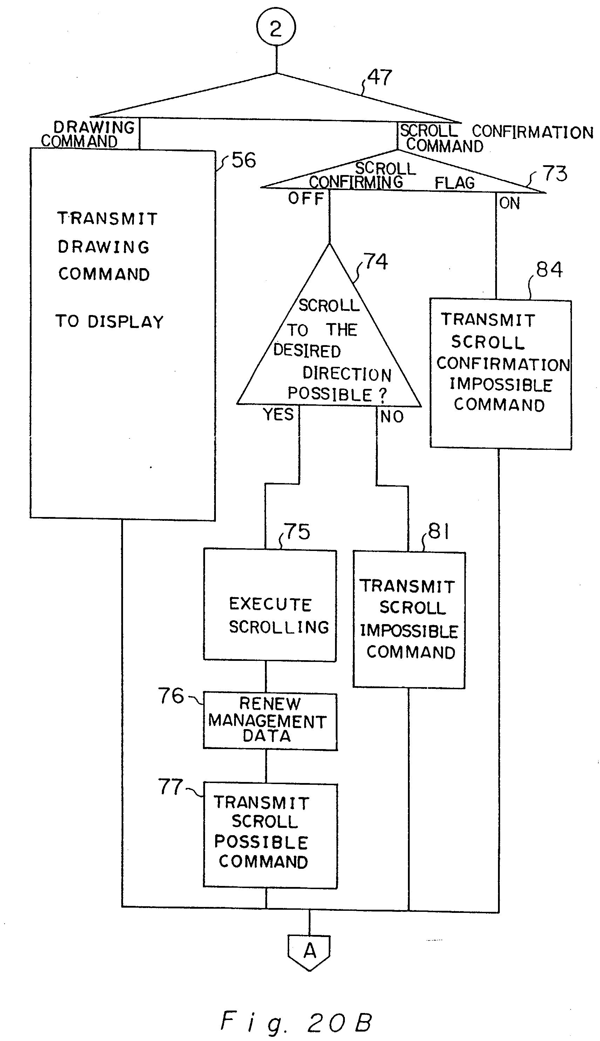

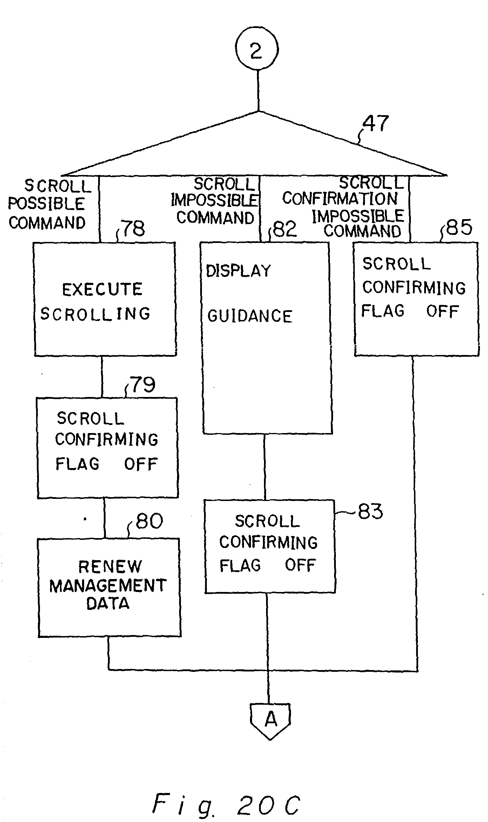

Fig. 19 is a operational flow chart for a pen input in which the input is entered on tablet 19 by input pen 18 as shown in Fig. 5. Fig. 20 is a operational flow chart for the command entered by the other terminal via a net-work.

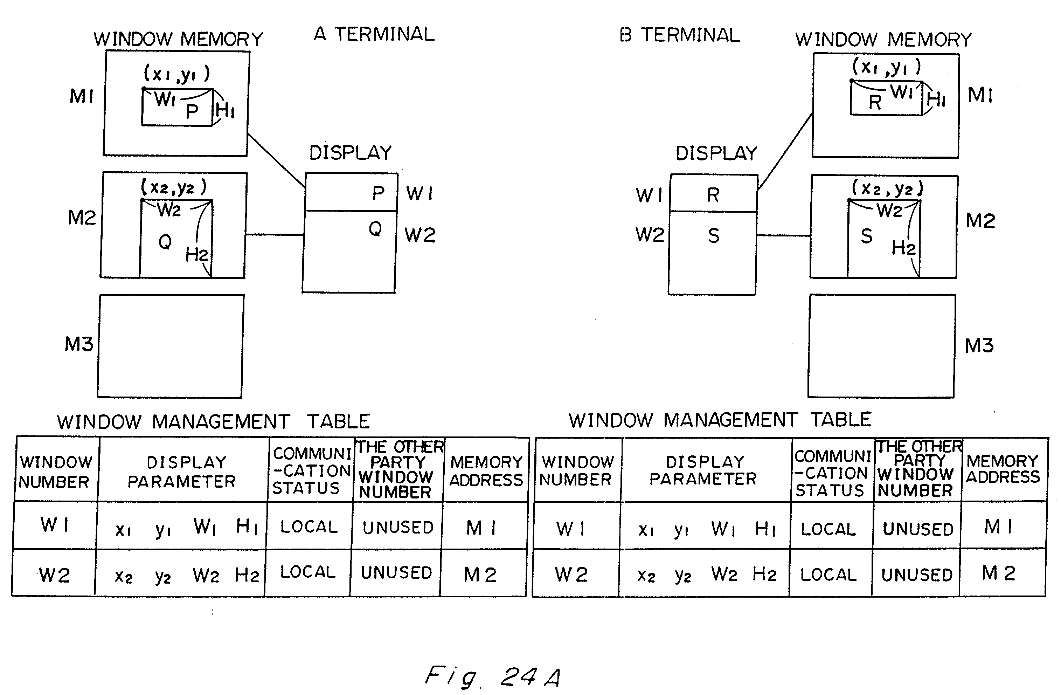

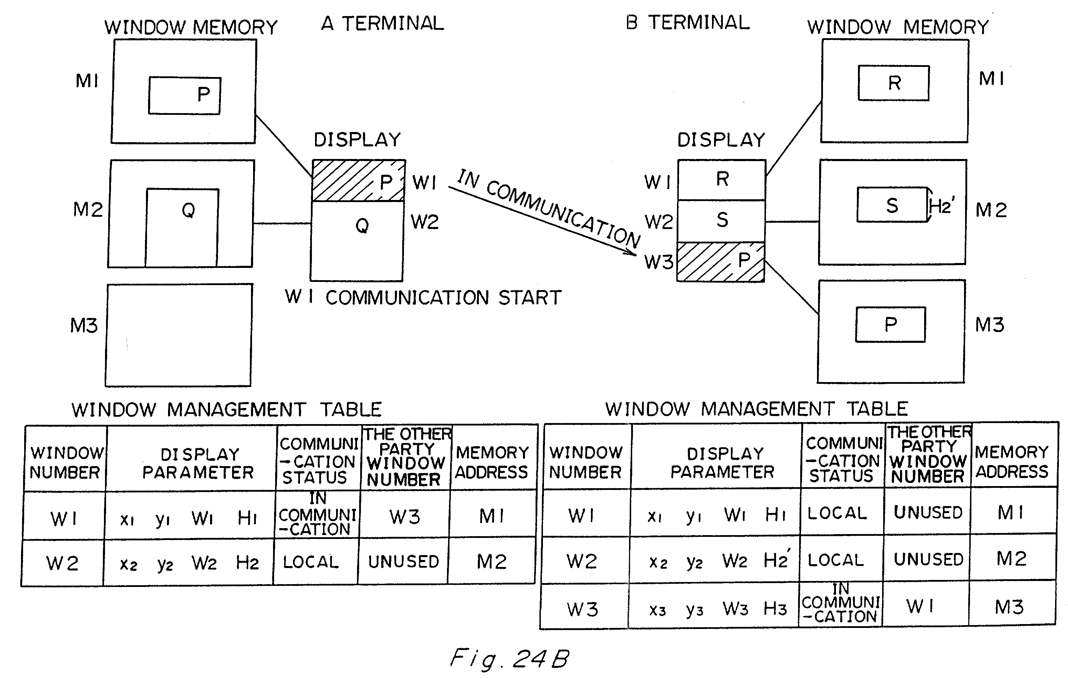

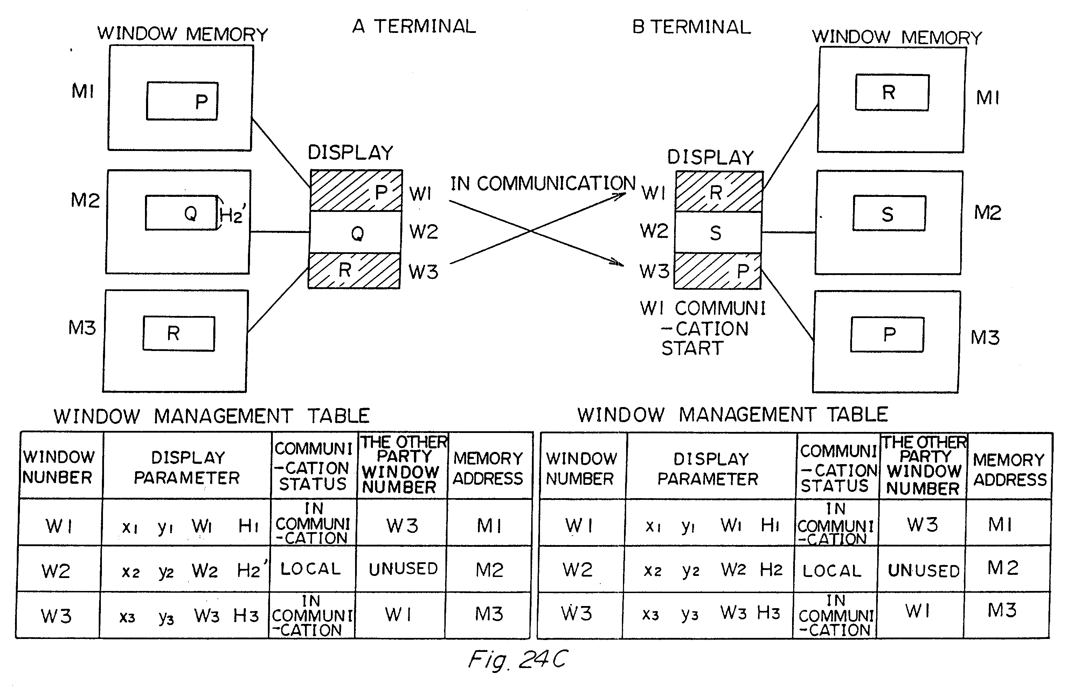

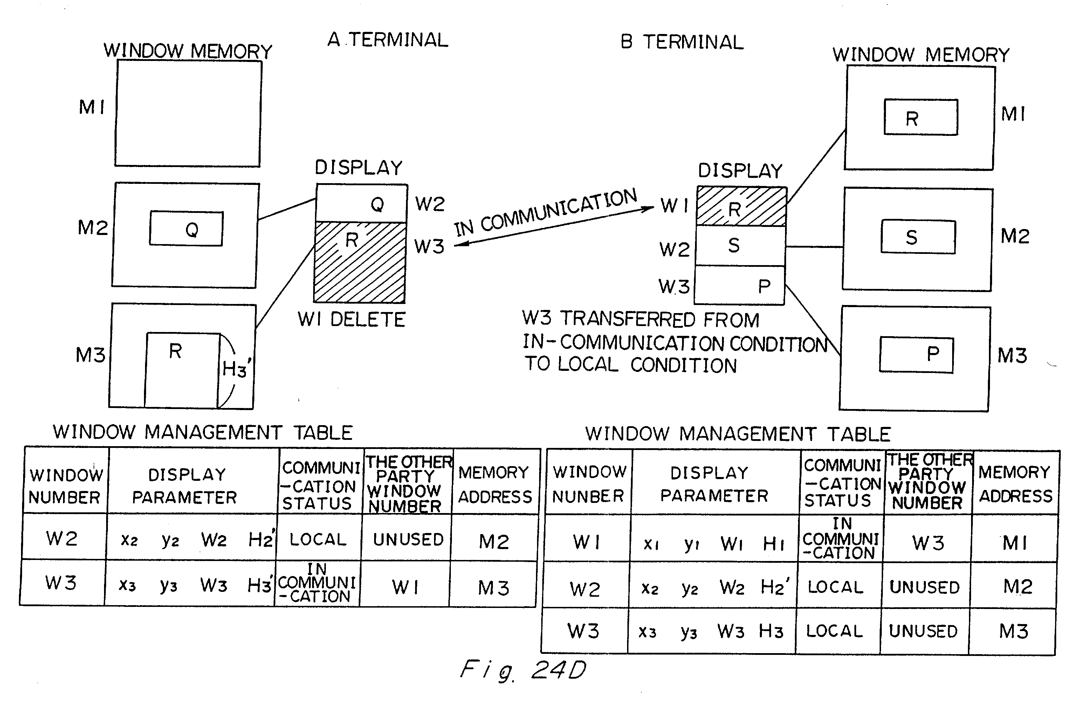

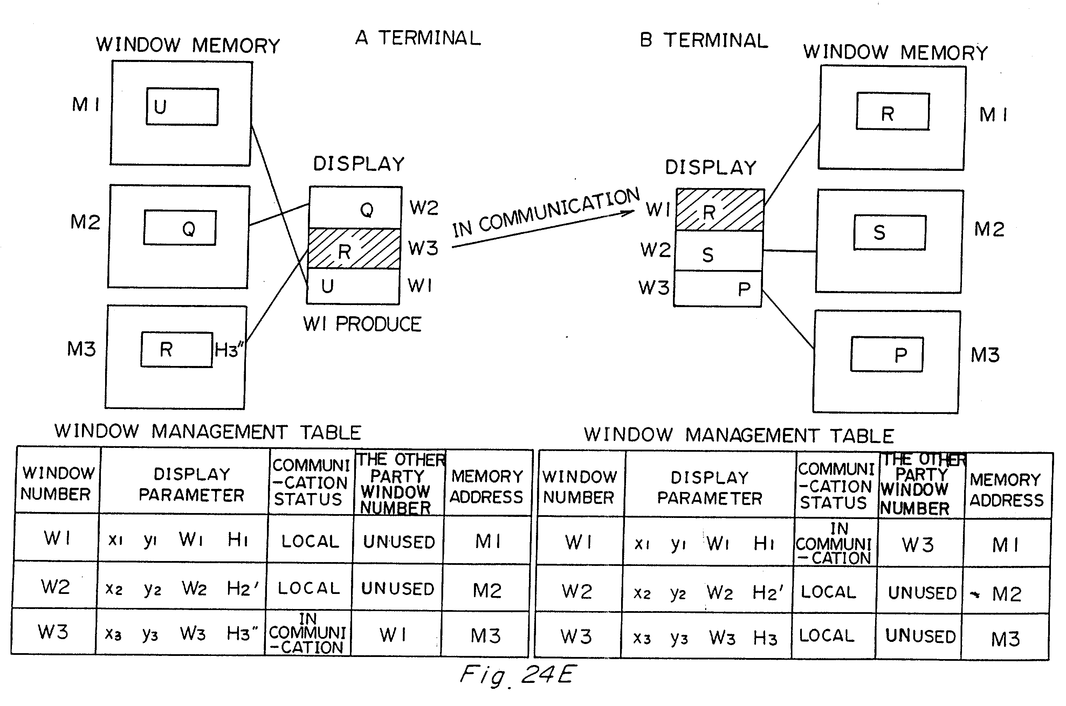

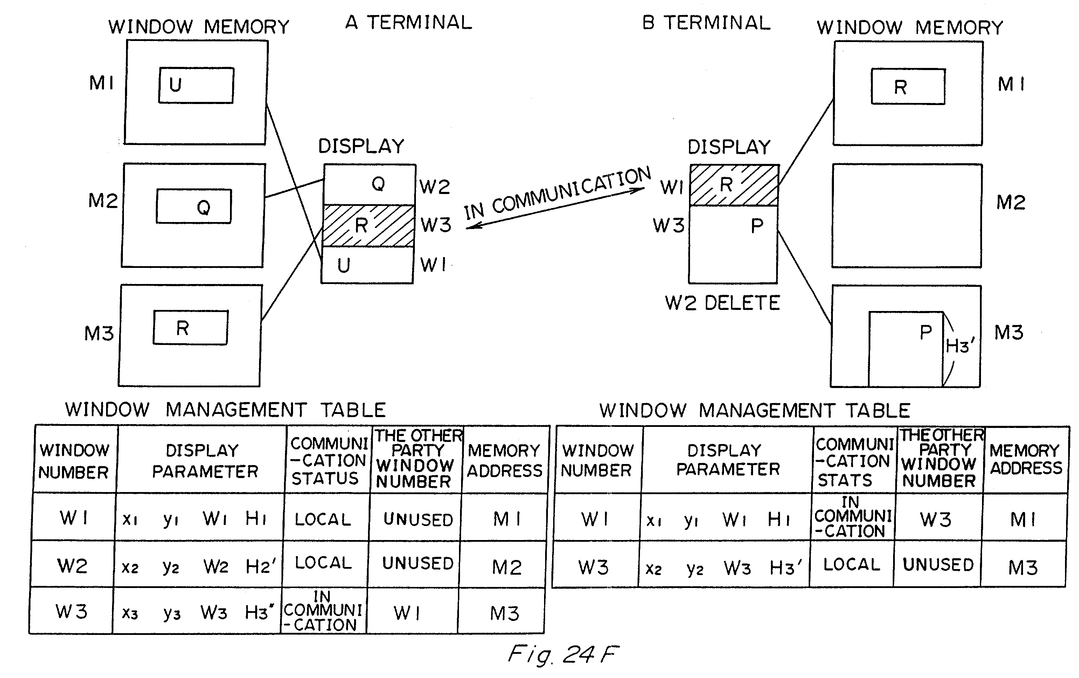

For example, where a communication between windows starts between an A terminal and a B terminal, input pen 18 touches an icon on the terminal display, thereby enabling the pen input to be detected at step 40 shown in Fig. 18 and the input coordinate is analyzed by command analysis means 11 at step 41. When window management means 14 judges that the telewriting starts command is received, based on the output of command analysis means 11 at step 43 of Fig. 19, transmitting and receiving means is requested to transmit a request for telewriting start command with a window number used for communication in the A terminal as a parameter, to the B terminal at step 44. The content of the window management table is renewed in response to a reply from the B terminal side at step 45. Where a connection of the B channel B2CH is not yet conducted at step 44, a connection is requested to transmitting and receiving means 13. A window management table is provided inside data memory 26 in respective terminals. An example is shown in Fig. 24. A communication status designating whether it is local or in communication and the data of the display area on the display is stored in a plurality of windows in the home terminal. Thereafter, at step 46 transmitting and receiving means 13 is asked to transmit the document data used in the communication window of the A terminal to the B terminal as a batch. Telewriting start processing then ends and returns to the step 40 in Fig. 18.

The B terminal side receives, from command analysis means 11, a telewriting start request from the A terminal as a command from a network at step 42 shown in Fig. 18 and determines the kind of command at step 47 in Fig. 20. When a telewriting start request is judged, an unused window number is hunted at step 48. A telewriting acknowledge is informed to the A terminal by using the window number used for communication between A and B terminals as a parameter at step 49. Data is received from the A terminal and stored in the memory at step 50. Display means 12 is asked to perform a display on a communication window on the B terminal at step 51. Telewriting start processing then ends and returns to step 40.

Telewriting starts when the A terminal user performs a pen touch to draw an image on the window display in communication on tablet 19. The pen input is executed as an image telewriting command at step 43 through steps 40 to 42. The status of the window on which image telewriting data is input is referred to at step 52. If the window receiving a pen input is determined as local at step 53, drawing is conducted at the originating terminal at step 54. Processing then returns to step 40.

By referring to the window management table at step 52, the window to which hand-drawing data is input is determined as in communication at step 53. Drawing is conducted at the originating terminal at step 55 and hand-drawing data is transmitted to the other terminal (B-terminal) at step 40.

Hand-drawing data from the A terminal is received by the B terminal as a command from a network. After the processes at steps 41 and 42, the command is judged as a drawing order, at step 47 and then the window number to be drawn is referred to in the window management table at the originating terminal. The window memory address (or memory address) in which the document of the corresponding window is stored is used as a parameter and the drawing order is transmitted to the display means and the process is returned to step 40.

Upon completing a telewriting or upon interrupting a communication directed to a predetermined window between window communication terminals, a request is entered as a command by a pen input from the A terminal and judged as a telewriting end command at step 43 through steps of 40 and 42. The telewriting end request to the B-terminal is output to be transmitted with the window numbers of both terminals as a parameter, at step 57. The content of the window management table is renewed from a communication state to a local state at step 58, thereby being returned to step 40. At the B terminal the telewriting end request is received as a command from the network. After steps 41 and 42, the telewriting end request is judged at step 47. The status of the corresponding window in the window management table is made local at step 59. The process then returns to step 40. When all the in-communication window are deleted at step 59, the disconnecting of B2CH is conducted.

Further, where the window which is used locally or for communication in the own terminal is deleted, the user touches an icon on the display. After steps 40 to 42, if a window deleting command is received in step 43, the window management table is rewritten at step 60 and a request for window deletion is conducted by display means 12 at step 61, and the process returns to step 40. When it is necessary to create a new window, a pen touch on a icon on the user's display is judged as a window create command at step 43 after steps 40 to 42. An unused window number is searched at step 62 and the new window display is requested at step 63, and the process returns to step 40.

Next, the scrolling control sequence is explained by referring to the flow charts shown in Figs. 18 to 20. If the user at the A-terminal 1 inputs a scrolling command (scroll button) on display 24 by using input pen 18, for example, it is judged as a scroll command at step 43 after steps 40 to 42. Therefore, at step 64, it is judged from the longitudinal width, horizontal width and scrolling amount based on window in the window management data whether the A-terminal 1 can scroll the window of the originating terminal in the desired direction. If it is judged at step 65 that scrolling is impossible, a guidance display is made on the display means 12 at step 66, and the process returns to step 40.

When it is judged that scrolling is possible, it is judged from a flag designating a status of in-communication at step 67 whether the scrolling command from the user is given to the window in communication. If the flag is off, the window to be scrolled is not in communication and the screen scrolling requested by display means 12 at step 68 is renewed at step 69, and the process is returned to step 40.

When a flag designating "in-communication" is turned on, the content of a flag showing a scroll confirming is judged at step 70. If this flag is already turned on, the response to the scroll confirming demand which was previously produced by at the B terminal 2 has not yet been provided and the process is returned to step 40 without producing a new scroll confirming request.

When the scrolling confirmation flag is off, it is turned on at step 71 and a scrolling confirmation command is transferred to the transmitting and receiving means 13 at step 72, and the scrolling confirmation request is transmitted to the B terminal 2 as shown in Figs. 16A and B. When B terminal 2 receives this confirmation request it transmits it to window management means 14 as an input from transmitting and receiving means 13 at step 42 through step 41 as shown in Fig. 18 and the scrolling confirmation command is judged at step 47 in Fig. 20. Next, the content of the scrolling confirmation flag at the B terminal 2 is judged at step 73 and if the scrolling confirmation flag is off, it is judged in step 74 whether scrolling in the predetermined direction is possible. When scrolling can be conducted, it is requested at step 75 by display means 12 and the window management table is renewed at step 76. A reply designating that scrolling is possible is transmitted to transmitting and receiving means 13 at step 77, and the process returns to step 40.

After steps 41, 42, the A terminal 1 judges that the reply from the B terminal 2 at step 47 is a scrolling possible command and asks display means 12 to perform a screen scrolling at step 78 and turns scrolling confirmation flag off at step 72. After the window management data is renewed at step 80, the process is returned to step 40. Thus, the sequence of Fig. 16A is completed.

When it is judged at step 74 at B terminal 2 that scrolling in a predetermined direction is impossible, a scrolling impossible reply is transmitted to transmitting and receiving means 13 at step 81. The reply is judged as a scrolling impossible command at step 47 of the A terminal 1 side. The guidance display showing the above operation is requested by display means 12 at step 82. At step 83 the scrolling confirmation flag is turned off, and the process is returned to step 40. This corresponds to the sequence of Fig. 16B.

When the scrolling confirmation flag is judged to be on at step 73 of B terminal 2, it means that the reply to the scrolling confirmation request previously transmitted from the B terminal 2 to A terminal 1 is not made. In order to prevent a collision of scrolling confirmation request, in Fig. 17, a scrolling confirmation impossible reply is transmitted to transmitting and receiving signal means 13 at step 84. This reply is judged as a scrolling confirmation impossible command at the A-terminal 1 side at step 47 and the scrolling confirmation flag is turned off at step 85. The process is then returned to step 40.

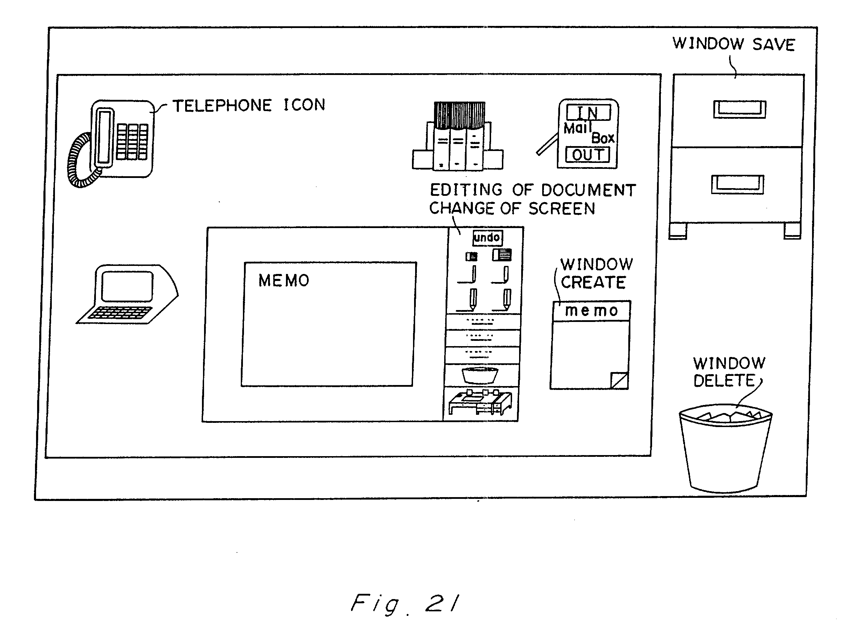

Next, by referring to the multi-window telewriting terminal shown in Fig. 5, the case where the user (user A) of the A-terminal 1 telephones a user (user B) of the B-terminal 2 and telewriting is conducted is explained in detail. Fig. 21 shows an initial screen of the terminal. Terminal icon 86, telephone icon 87, book shelf icon 88, mail box icon 89, memorandum paper icon 90, under sheet icon 91, pencil case icon 92, file master icon 93 and waste basket icon 94 are respectively shown. The meaning of the icon is briefly explained. When the terminal icon 86 is touched by a pen, the terminals start to function, as the data terminal can receive an input from key board 16. When the telephone icon 87 is touched by a pen a multi-functional telephone board comprising a telephone dial key, transfer button, and suspending button is displayed. The displayed buttons are designated by input pen 18 thereby enabling an input such as a telephone number to be entered, thereby providing a telephone function in which a communication is possible using hand-set 27. When the shelf icon 88 is pen-touched, the process shifts to a phase in which access is made to data base such as a telephone book or a schedule note. If the mail box icon 89 is pen-touched after the document is pen-touched, the process shifts to the phase in which a document is transferred by electronic mail and if the mail box 89 is pen-touched before the document is pen-touched, a list of received mail is displayed and the process moves to a phase in which mail is read out.

When memorandum paper icon 90 is pen-touched, it means that the blank document is determined or picked up. If the underlay icon 91 is pen-touched after the document is pen-touched, the document is displayed. When the pencil case icon 92 is pen-touched, the process progresses to a screen on which the document is edited. If file master icon 90 is pen-touched, the drawer is opened and the document in the drawer is displayed. If, after the document is pen-touched, the waste basket case icon 94 is pen-touched, the document is deleted.

In Fig. 21, user A obtains the document (MEMO) from the master file and places it on the under lying diagram. User A utilizes a multi-functional telephone displayed on a screen by pen-touching the diagram of the telephone thereby telephoning user B. The call-execution sequence is shown in Fig. 11.

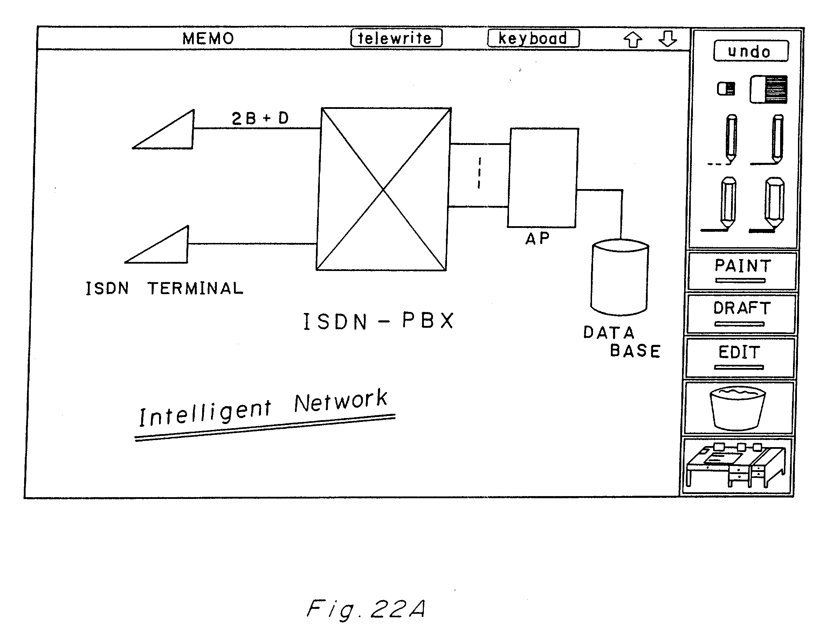

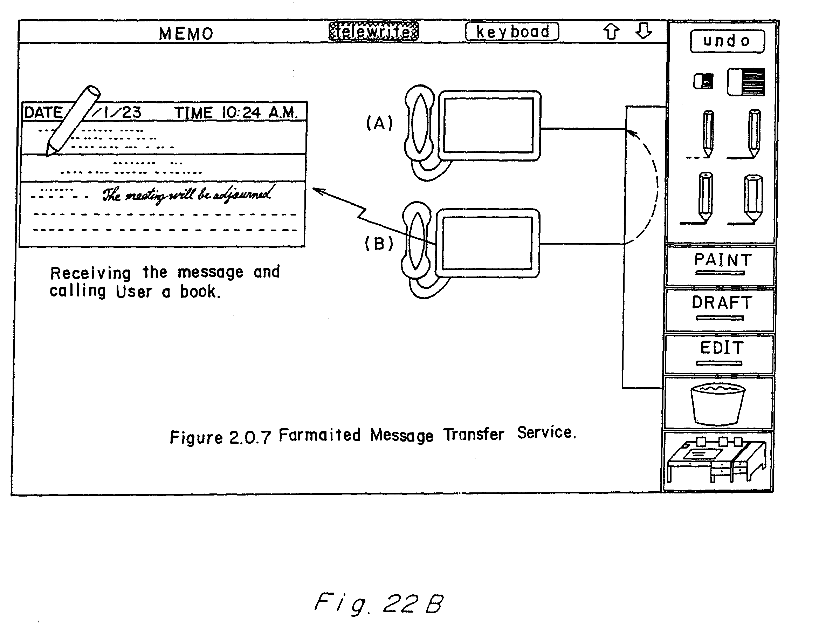

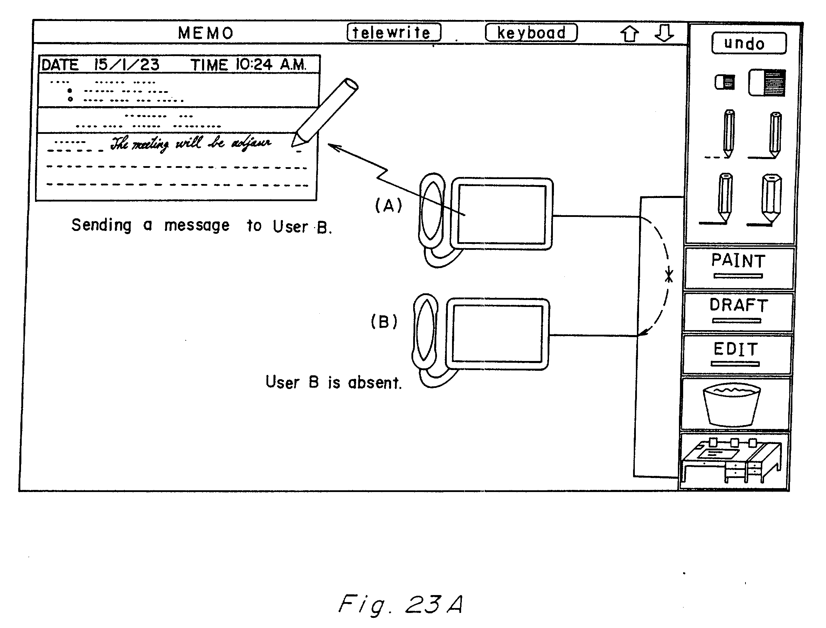

When the user B answers the telephone, user A pen-touches the diagram of the pencil case to transfer the document by proceeding to the screen in Fig. 22A. Various drawing tool icons such as a pencil and an eraser as shown on the right side of the screen, are selected by the input-pen 18. The telewriting mode varies in accordance with respective icons. As shown in the drawing, the name MEMO of the document is provided on the upper left side on the document and an icon for designating the document is provided. The meaning of the icons are explained sequentially from the left side. They are the telewriting start button, key board input input button, upper scroll button on the screen and lower scroll button on the screen. The screen of user B shows that the document is being prepared in a local mode as shown in Fig. 23A, in the state before the document receives. When the transfer of the document is completed, a title bar of the received document is expressed at the lower part of the screen. The received document is then in a telewriting status and the telewriting button is depressed such that white and black are reversed.

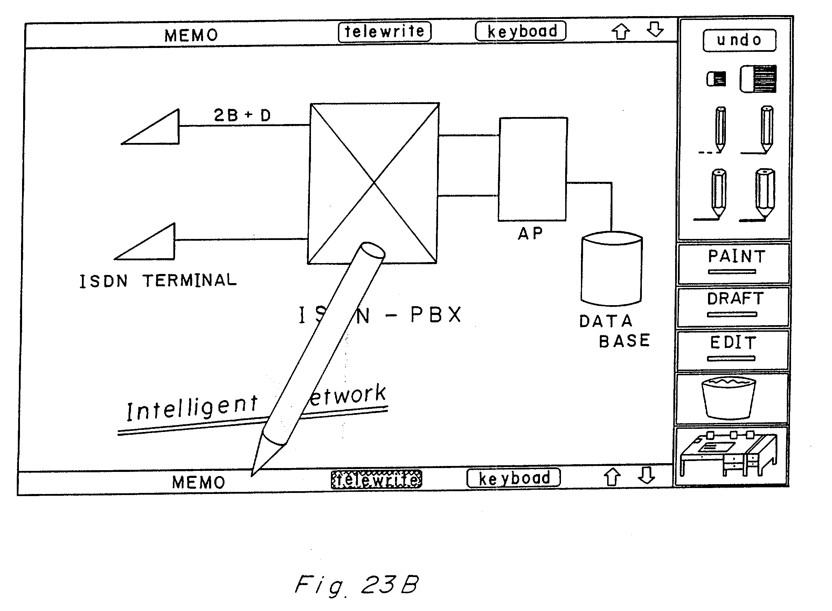

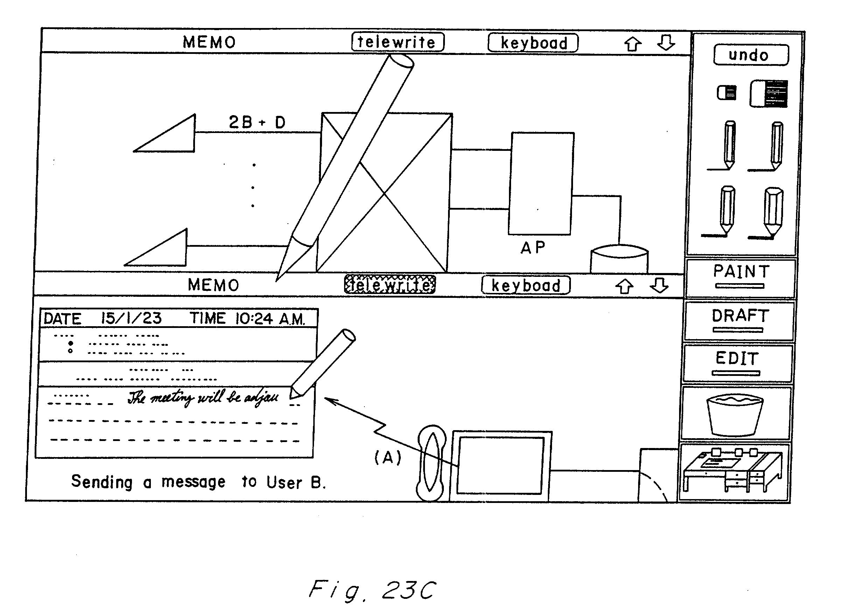

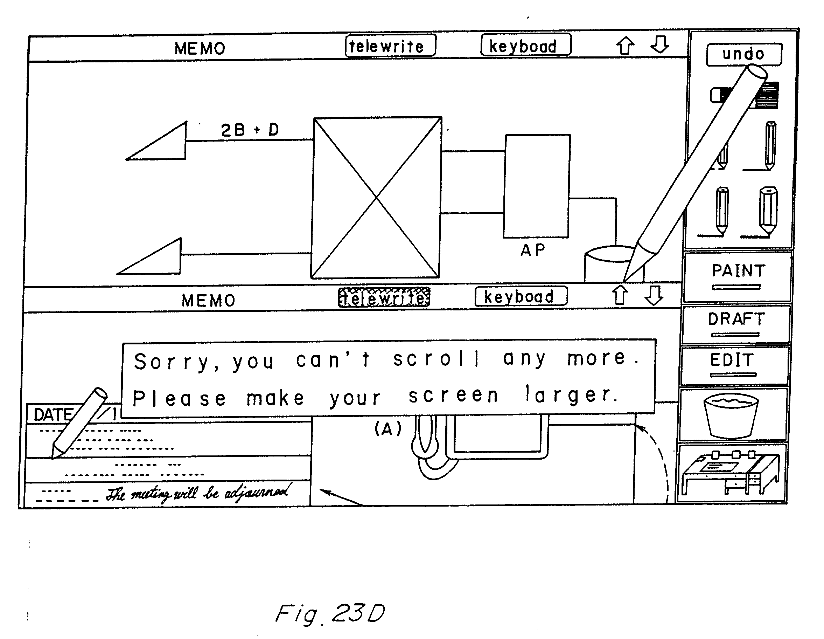

User B pen-touches a menu bar with input-pen 18 and draws it up as shown in Fig. 23C. As user B's window is smaller than user A's, only the upper part of user A's screen is displayed on user B's screen. If user B pen-touches the downward scroll button, the screens of both user A and user B are scrolled down. Fig. 23D shows that user A's screen reaches the receiving terminal as shown in Fig. 23B, and cannot be scrolled further. This indicates that further scrolling is impossible.

Fig. 24 shows a transient usage status of the window memory and the window management table corresponding to the window display. Fig. 24A shows an initial state. The left side is, for example, the A terminal and the right side is, for example, the B terminal. Two windows W1 and W2 are used locally and the contents "P" and "Q" of the windows W1 and W2 are respectively stored in window memories M1 and M2. The widow display parameters, data for designating whether the window is in communication, local or not used and the window number of the other terminal in communication, and the address of the window memory in the own terminal, i.e. the memory number, are stored in the window management table in the A terminal. The display parameters are coordinates X1 and Y1 on the upper left point of the display area, the horizontal width W1 and the vertical (height) width H1 of the display area in which the window is displayed on a screen of the terminal. In Fig. 24A , the window W1 is stored in memory M1 at the B terminal. The coordinates of the upper left point of the display area are X1 and Y1, its horizontal width is W1, and its height is H1. W1 is used locally and the contents thereof are denoted by "R". The window W2, stored in memory M2, is similarly used locally.

Fig. 24B shows the state in which window W1 of the A terminal is in communication with the window W3 of the B terminal. A telewriting start request is produced at the A terminal using the window W1 and a new window W3 is opened in memory M3, which is not used for the B terminal in Fig. 24A. The contents "P" of W1 of the A terminal which are transmitted from the A terminal are stored and displayed on the display. The window W1 in the management table of the A terminal is put in an in-communication status and the window number of the other party is W3. On the other hand, window W3 of the B terminal is used for communication, and when its status is designated as in-communication, the window number of the other party becomes W1. Fig. 24C shows a configuration in which a telewriting start request is produced at the B terminal using window W1 and the B terminal becomes in-communication with newly provided window W3 in the A-terminal side. Thus, the content of the window W3 of the A terminal becomes "R". Then, window W1 in the management table in the B terminal is put in "in-communication" status and the window number of the other party becomes W3. Window number W3 in the management table in the A terminal is put in "in-communication" status and the window number of the other party becomes W1. Fig. 24D shows a configuration in which a communication between W1 in the A terminal and W3 in the B terminal, as shown in Fig. 24C, is completed. The content "P" is deleted from the A terminal and the B terminal becomes local. Accompanying this, window W3 of the management table of the B-terminal becomes local. "Q" of window W2 and "R" of window W3 are displayed at the A terminal.

Fig. 24E shows a configuration in which a new window W 1 is created at the A terminal. Its content is "U" and its communication status is local.

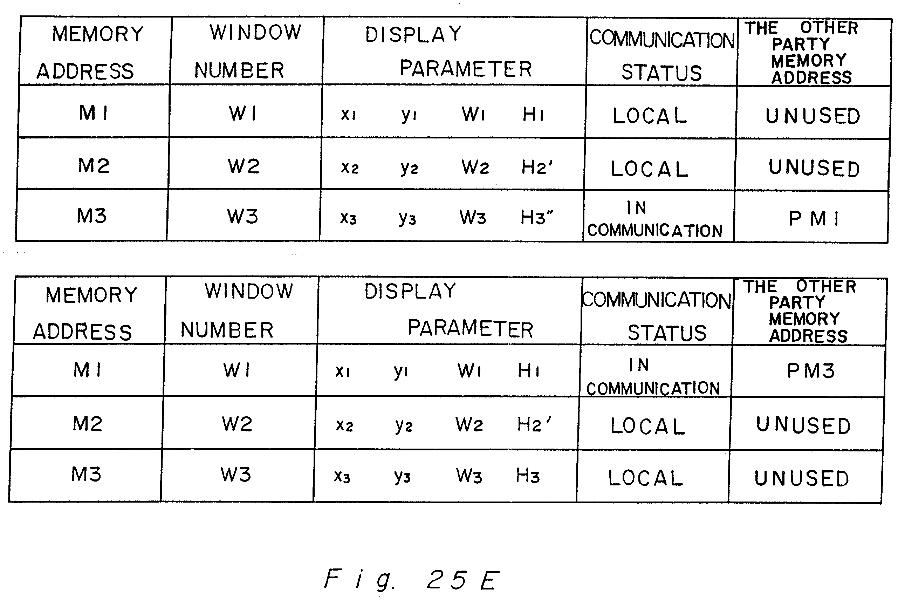

Fig. 24F shows a configuration in which a window W2 at the B terminal as shown in Fig. 25E is deleted, and "R" is displayed in window W1 and "P" is displayed in window W3.

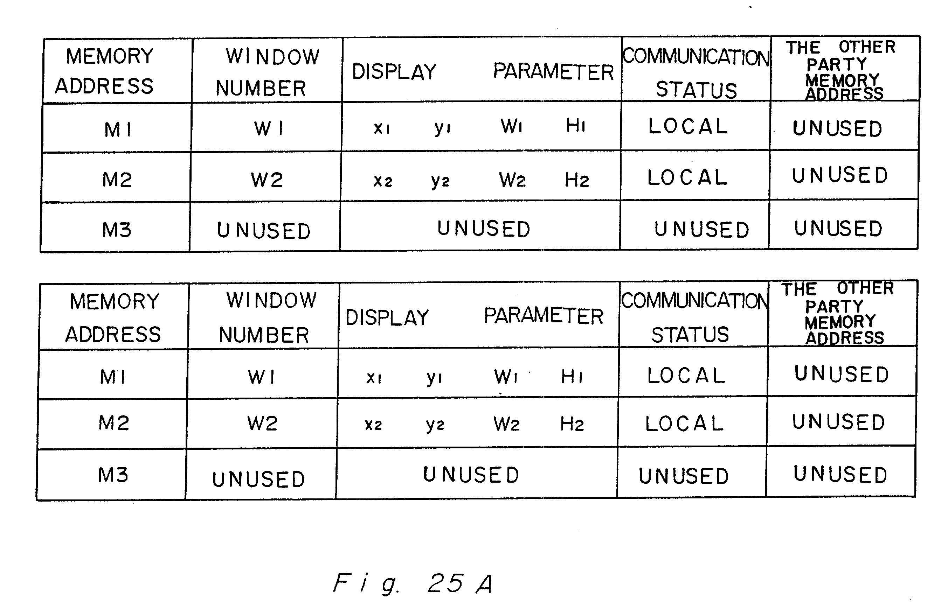

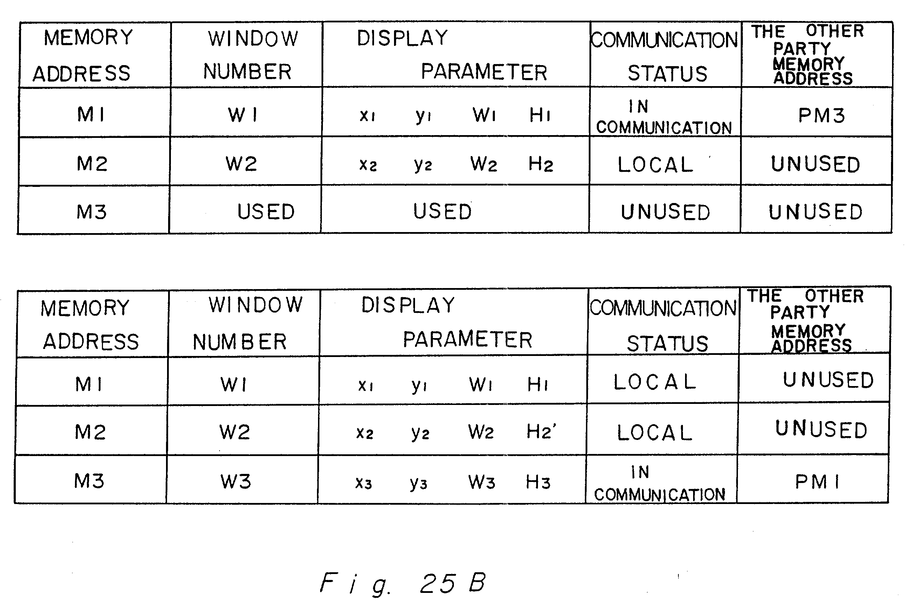

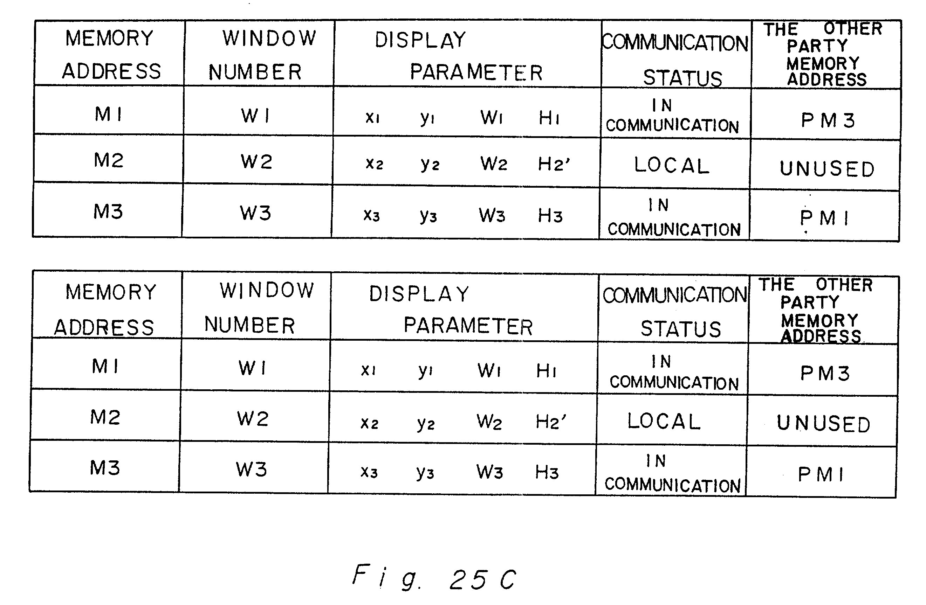

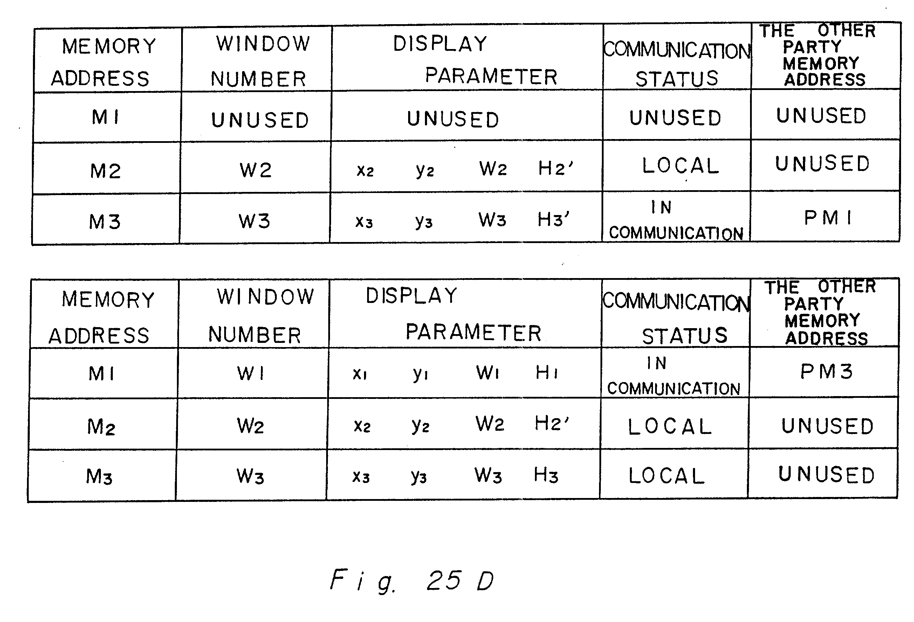

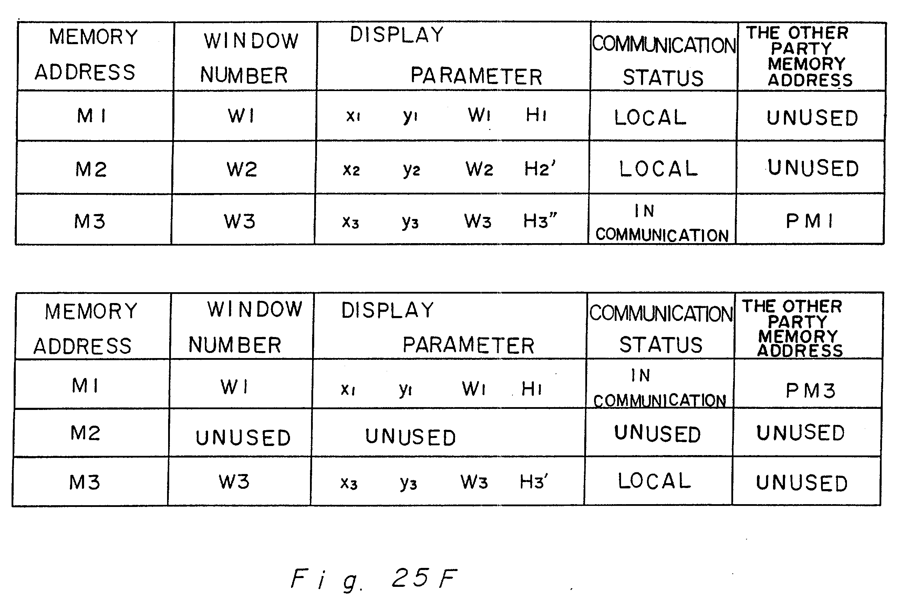

Fig. 25 shows window management tables for the configurations shown in Fig. 24, with the memory address as a reference. The window numbers correspond to the memory addresses. Thus, it is possible to communicate between multi-window telewriting terminals by using memory addresses as parameters. The party to which a communication is sent is stored in the window management table under its memory address, but not under its window number, as shown in Fig. 25. Figs. 25A to 25F correspond to the window management table configurations shown in Figs. 24A to 24F.

As explained above, respective windows of the multi-window telewriting terminal can be used as local windows for displaying the data of only the own terminal. They can also be used for to communicate with another terminal. In addition, a plurality of windows can be used to perform a telewriting with another terminal. Therefore, it becomes possible to use multi-window telewriting, thus further increasing the effect of the telewriting service.

As explained above, scrolling of the window screen can be conducted after the scrolling of the other terminal is confirmed. Therefore, this invention facilitates a screen scrolling between different-sized terminals, and increases the usability of a terminal with a multi-window display function.

## Claims

1. A multi-window communication system, in which first and second terminals are arranged to perform communication, each terminal comprising:
inputting means (10) for inputting function execution commands;
control means (11) for analyzing and executing a command input by said inputting means and a command transmitted from a remote terminal to a local terminal;
display means (12) for displaying a plurality of windows including a communication window used for telecommunication between the first and second terminals and a local window used only in the first terminal, under the control of said control means;
transmitting and receiving means (13) for transmitting and receiving information associated with said communication window between the first and second terminals, under the control of said control means; and
window management means (14) for managing a window using the information received from the remote terminal by said transmitting and receiving means, wherein
said transmitting and receiving means (13) of the local terminal is arranged to transmit a request to the second terminal to start telecommunication, thereby performing a telecommunication between the communication windows of the first and second terminals.

2. A multi-window communication system according to claim 1, wherein
said transmitting and receiving means (13) is arranged to transmit and receive window data including window identifiers of the communication windows of the first and second terminals for performing a telecommunication between the communication windows corresponding to the window identifiers.

3. A multi-window communication system according to claim 2, wherein
said transmitting and receiving means (13) is arranged to transmit and receive signals to and from the other terminal under the control of said controi means (11), said signals designating a window to be used for communication between the first and second terminals by a window identifier.

4. A multi-window communication system according to claim 2, wherein
said transmitting and receiving means (13) is arranged to transmit and receive signals to and from the other terminal under the control of said control means (11), said signals designating a window to be used for communication between the first and second terminals by using a memory address.

5. A multi-window communication system according to claim 2, wherein
said window management means (14) is arranged to maintain window management data, change a window frame, and controls a scrolling of a window screen in both the vertical and horizontal direction.

6. A multi-window communication system according to claim 2, wherein
said transmitting and receiving means (13) of the second terminal is arranged to enable a search of a window of the second terminal in response to the request from the first terminal to start telewriting, and to return a receipt of a telecommunication signal to the first terminal using a window identifier of the searched window as a parameter, when said window has been found, and to transmit and receive picture information between the first and second terminals.

7. A multi-window communication system according to claim 2, wherein
said transmitting and receiving means (13) of the second terminal is arranged to enable a search of a window of the second terminal in response to the request from the first terminal to start telecommunication, and to return an "acknowledge of telecommunication" signal using a memory address of the searched window as a parameter, to the first terminal when said window has been found, and then to transmit and receive picture information between the first and second terminals.

8. A multi-window communication system according to claim 2, wherein
said transmitting and receiving means (13) of the first terminal is arranged to produce a request for start of a telecommunication and a request for searching a window, these requests being sent to the second terminal and being conducted independently of each other, and a window identifier of the window searched by the request for searching and picture information are transmitted and received, in use of the communication system, between the first and second terminals.

9. A multi-window communication system according to claim 2, wherein
said transmitting and receiving means (13) of the first terminal is arranged to produce a request for start of a telecommunication and a request for searching a window, these requests being sent to the second terminal and being conducted independently of each other, and a window address of the window searched by the request for searching and picture information are transmitted and received, in use of the communication system, between the first and second terminals.

10. A multi-window communication system according to claim 1, wherein
transmitting and receiving means (13) is provided, arranged to transmit and receive signals between the communication windows of the local and remote terminals so as to independently control the plurality of communication windows on the local and remote terminals displaying documents respectively common to the local and remote terminals under the control of said control means.

11. A multi-window communication system according to claim 10, wherein
window management means (14) is provided, arranged to maintain window management data, change a window frame and control simultaneous scrolling of pairs of the communication windows of the local and remote terminals, where pairs of the communication windows display common documents, such that each of the local and remote terminals display the same portion of the common documents at the top-left of each window of the pair of the communication windows, said simultaneous scrolling being carried out independently of other pairs of the communication windows, under the control of said window management data and said control means.

12. A multi-window communication system according to claim 10, wherein
said transmitting and receiving means (13) is arranged to transmit and receive signals to and from the other terminal under the control of said control means (11), said signals designating a window to be used for communication between the first and second terminals by a window identifier.

13. A multi-window communication system according to claim 10, wherein
said transmitting and receiving means (13) is arranged to transmit and receive signals to and from the other terminal under the control of said control means (11), said signals designating a window to be used for communication between the first and second terminals by using a memory address.

14. A multi-window communication system according to claim 10, wherein
said window management means (14) is arranged to maintain window management data, change a window frame, and control a scrolling of a window screen in both the vertical and horizontal directions.

15. A multi-window communication system according to claim 1, wherein
said inputting means (10) is arranged to input commands for frame change and screen scrolling,
said window management means (14) is arranged to change a window frame and to control simultaneous scrolling of the communication window of the local and remote terminals which displays common document, such that each of the local and remote terminals displays the same portion of the common document at a predetermined point of each of the communication windows, and wherein
the local terminal is arranged to inquire of the remote terminal whether or not scrolling of the communication window of the remote terminal can be performed and to perform scrolling of the communication window of the local and remote terminals when the local terminal receives an answer that scrolling of the communication window of the remote terminal can be performed.

16. A multi-window communication system according to claim 15, wherein
said window management means (14) is arranged to maintain window management data, to change a frame of a window to a discretional frame having a width less than that of the document frame and to scroll a window screen, under the control of said control means (11).

17. A multi-window communication system according to claim 15, wherein
said window management means (14) is arranged to maintain window management data, to change a window frame, and to control a scrolling of a window screen in both the vertical and horizontal directions.

18. A method of controlling a window screen scrolling in communication between a first and second terminal, comprising the steps of:
providing the first terminal with a first scrolling confirming flag, the first scrolling confirming flag being set "on" when a possibility of scrolling a screen in the first terminal is being examined and providing the second terminal with a second scrolling confirming flag, the second scrolling confirming flag being set "on" when a possibility of scrolling a screen in the second terminal is being examined;
judging, at the first terminal, whether or not a scrolling of a screen in the first terminal is possible, when receiving a request of simultaneous scrolling of screens in the first and second terminals at the first terminal and turning on the first scrolling confirming flag and transmitting a scrolling confirmation request from the first terminal to the second terminal;
judging, at the second terminal, the content of the second scrolling confirming flag, when receiving the scrolling confirmation request;
returning a "scrolling impossible" signal from the second terminal to the first terminal when the second scrolling confirming flag is on;
judging, at the second terminal, whether or not a scrolling of the window in the second terminal is possible, when the second scrolling confirming flag is off;
returning a "scrolling impossible" signal from the second terminal to the first terminal when the scrolling in the second terminal is judged to be impossible;
performing, in the second terminal, scrolling of a screen when the scrolling in the second terminal is judged to be possible;
returning a "scrolling possible" signal from the second terminal to the first terminal when the scrolling in the second terminal is judged to be possible; and
performing, in the first terminal, a scrolling of the screen.

19. A screen scrolling control method according to claim 18, wherein
a judgement is performed in judging means of said first and second terminals whether or not a scrolling is possible at the lower limit of the window screen.

## Patentansprüche

1. Mehrfenster-Kommunikationssystem, in welchem erste und ein zweite Terminals zur Durchführung der Kommunikation angeordnet sind und jeder Terminal umfaßt:
eine Eingabeeinrichtung (10) zur Eingabe von Funktionsausführungsbefehlen;
eine Steuereinrichtung (11) zur Analyse und zur Ausführung eines über die Eingabeeinrichtung eingegebenen sowie eines von einem entfernten Terminal an den örtlichen Terminal gesandten Befehls;
eine Anzeigeeinrichtung (12) zur von der Steuereinrichtung gesteuerten Anzeige mehrerer Fenster einschließlich eines für die Telekommunikation zwischen dem ersten und dem zweiten Terminal benutzten Kommunikationsfensters sowie eines ausschließlich im ersten Terminal verwendeten örtlichen Fensters;
eine Sende- und Empfangseinrichtung (13) zum Senden und Empfangen von Informationen zwischen dem ersten und zweiten Terminal in Verbindung mit dem Kommunikationsfenster und gesteuert von der Steuereinrichtung; und
eine Fensterverwaltungseinrichtung (14) zur Verwaltung eines Fensters unter Verwendung der von dem entfernten Terminal über die Sende- und Empfangseinrichtung empfangenen Information, wobei
die Sende- und Empfangseinrichtung (13) des örtlichen Terminals derart eingerichtet ist, daß sie an den zweiten Terminal eine Anforderung zum Start der Telekommunikation sendet, wodurch eine Telekommunikation zwischen den Kommunikationsfenstern des ersten und zweiten Terminals durchgeführt wird.

2. Mehrfenster-Kommunikationssystem nach Anspruch 1, bei welchem
die Sende- und Empfangseinrichtung (13) derart eingerichtet ist, daß sie Fensterdaten mit Fensteridentifizierungszeichen der Kommunikationsfenster des ersten und zweiten Terminals sendet und empfängt, um die Telekommunikation zwischen denjenigen Kommunikationsfenstern durchzuführen, welche den Fensteridentifizierungszeichen entsprechen.

3. Mehrfenster-Kommunikationssystem nach Anspruch 2, bei welchem
die Sende- und Empfangseinrichtung (13) derart eingerichtet ist, daß sie gesteuert von der Steuereinrichtung (11) Signale zum anderen Terminal sendet und von diesem empfängt, wobei die Signale ein für die Kommunikation zwischen erstem und zweitem Terminal zu verwendendes Fenster mittels eines Fensteridentifizierungszeichens bezeichnen.

4. Mehrfenster-Kommunikationssystem nach Anspruch 2, bei welchem
die Sende- und Empfangseinrichtung (13) derart eingerichtet ist, daß sie gesteuert von der Steuereinrichtung (11) Signale zum anderen Terminal sendet und von diesem empfängt, wobei die Signale ein für die Kommunikation zwischen erstem und zweitem Terminal zu verwendendes Fenster mittels einer Speicheradresse bezeichnen.

5. Mehrfenster-Kommunikationssystem nach Anspruch 2, bei welchem
die Fensterverwaltungseinrichtung (14) derart eingerichtet ist, daß sie Fensterverwaltungsdaten hält, ein Fensterbild wechselt und das Rollen eines Fensterbildes sowohl in vertikaler als auch in horizontaler Richtung steuert.

6. Mehrfenster-Kommunikationssystem nach Anspruch 2, bei welchem
die Sende- und Empfangseinrichtung (13) des zweiten Terminals derart eingerichtet ist, daß sie als Reaktion auf die Anforderung des ersten Terminals zum Start der Telefax-Übermittlung die Suche eines Fensters des zweiten Terminals freigibt, daß sie an den ersten Terminal eine Quittung eines Telekommunikationssignals unter Verwendung eines Fensteridentifizierungszeichens des gesuchten Fensters als Parameter zurücksendet und
daß sie Bildinformationen zwischen dem ersten und zweiten Terminal sendet und empfängt.

7. Mehrfenster-Kommunikationssystem nach Anspruch 2, bei welchem
die Sende- und Empfangseinrichtung (13) des zweiten Terminals derart eingerichtet ist, daß sie als Reaktion auf die Anforderung des ersten Terminals zum Start der Telekommunikation die Suche eines Fensters des zweiten Terminals freigibt, daß sie an den ersten Terminal ein Signal "Bestätigung der Telekommunikation" unter Verwendung einer Speicheradresse des gesuchten Fensters als Parameter zurücksendet, wenn das Fenster gefunden worden ist und daß sie dann Bildinformationen zwischen dem ersten und zweiten Terminal sendet und empfängt.

8. Mehrfenster-Kommunikationssystem nach Anspruch 2, bei welchem
die Sende- und Empfangseinrichtung (13) des ersten Terminals derart eingerichtet ist, daß sie eine Anforderung zum Start einer Telekommunikation und eine Anforderung zur Suche nach einem Fenster zu erzeugen vermag, diese Anforderungen zum zweiten Terminal gesendet und unabhängig voneinander geleitet werden sowie ein Fensteridentifizierungszeichen des durch die Suchanforderung gesuchten Fensters und Bildinformationen unter Verwendung des Kommunikationssystems zwischen dem ersten und zweiten Terminal gesendet und empfangen werden.

9. Mehrfenster-Kommunikationssystem nach Anspruch 2, bei welchem
die Sende- und Empfangseinrichtung (13) des ersten Terminals derart eingerichtet ist, daß sie eine Anforderung zum Start einer Telekommunikation und eine Anforderung zur Suche nach einem Fenster zu erzeugen vermag, diese Anforderungen zum zweiten Terminal gesendet und unabhängig voneinander geleitet werden sowie eine Fensteradresse des durch die Suchanforderung gesuchten Fensters und Bildinformationen unter Verwendung des Kommunikationssystems zwischen dem ersten und zweiten Terminal gesendet und empfangen werden.

10. Mehrfenster-Kommunikationssystem nach Anspruch 1, in welchem
eine Sende- und Empfangseinrichtung (13) vorgesehen ist, die derart einrichtet ist, daß sie sowohl zwischen den Kommunikationsfenstern des örtlichen und des entfernten Terminals Signale zu senden und zu empfangen als auch die Vielzahl von Kommunikationsfenstern auf dem örtlichen und dem entfernten Terminal unabhängig zu steuern vermag, wobei auf dem örtlichen und dem entfernten Terminal die Dokumente, gesteuert von der Steuereinrichtung, jeweils gemeinsam angezeigt werden.

11. Mehrfenster-Kommunikationssystem nach Anspruch 10, in welchem
eine Fensterverwaltungseinrichtung (14) vorgesehen ist, die derart eingerichtet ist, daß sie Fensterverwaltungsdaten hält, ein Fensterbild wechselt und das gleichzeitige Rollen von Paaren der Kommunikationsfenster des örtlichen und des entfernten Terminals steuert, wobei Paare von Kommunikationsfenstern gemeinsame Dokumente anzeigen derart, daß sowohl der örtliche als auch der entfernte Terminal den gleichen Teil des gemeinsamen Dokumentes in jedem Fenster des Paares von Kommunikationsfenstern oben links anzeigen und das gleichzeitige Rollen unabhängig von anderen Paaren von Kommunikationsfenstern und gesteuert von den Fensterverwaltungsdaten und der Steuereinrichtung durchgeführt wird.

12. Mehrfenster-Kommunikationssystem nach Anspruch 10, bei welchem
die Sende- und Empfangseinrichtung (13) derart eingerichtet ist, daß sie gesteuert von der Steuereinrichtung (11) Signale zum anderen Terminal sendet und von diesem empfängt, wobei die Signale ein für die Kommunikation zwischen erstem und zweitem Terminal zu verwendendes Fenster mittels eines Fensteridentifizierungszeichens bezeichnen.

13. Mehrfenster-Kommunikationssystem nach Anspruch 10, bei welchem
die Sende- und Empfangseinrichtung (13) derart eingerichtet ist, daß sie gesteuert von der Steuereinrichtung (11) Signale zum anderen Terminal sendet und von diesem empfängt, wobei die Signale ein für die Kommunikation zwischen erstem und zweitem Terminal zu verwendendes Fenster mittels einer Speicheradresse bezeichnen.

14. Mehrfenster-Kommunikationssystem nach Anspruch 10, bei welchem
die Fensterverwaltungseinrichtung (14) derart eingerichtet ist, daß sie Fensterverwaltungsdaten hält, ein Fensterbild wechselt und das Rollen des Fensterbildes sowohl in vertikaler als auch in horizontaler Richtung steuert.

15. Mehrfenster-Kommunikationssystem nach Anspruch 1, bei welchem
die Eingabeeinrichtung (10) zur Eingabe von Befehlen zum Bildwechsel und Bildrollen eingerichtet ist;
die Fensterverwaltungseinrichtung (14) derart eingerichtet ist, daß der Wechsel eines Fensterbildes und das gleichzeitige Rollen des Kommunikationsfensters beim örtlichen und entfernten Terminal, welche das gemeinsame Dokument anzeigen, derart gesteuert werden, daß sowohl der örtliche als auch der entfernte Terminal den gleichen Teil des gemeinsamen Dokumentes an einem vorgegebenen Punkt jedes Kommunikationsfensters anzeigen und bei welchem
der örtliche Terminal derart eingerichtet ist, daß beim entfernten Terminal angefragt wird, ob das Rollen des Kommunikationsfensters des entfernten Terminals durchgeführt werden kann oder nicht und das Rollen des Kommunikationsfensters des örtlichen und des entfernten Terminals durchgeführt wird, wenn der örtliche Terminal die Antwort erhält, daß das Rollen des Kommunikationsfensters des entfernten Terminals durchgeführt werden kann.

16. Mehrfenster-Kommunikationssysem nach Anspruch 15, bei welchem
die Fensterverwaltungseinrichtung (14) derart eingerichtet ist, daß Fensterverwaltungsdaten gehalten werden, um gesteuert von der Steuereinrichtung (11) ein Fensterbild in ein diskretes Bild zu ändern, dessen Breite geringer ist als diejenige des Dokumentenbildes und um das Fensterbild zu rollen.

17. Mehrfenster-Kommunikationssystem nach Anspruch 15, bei welchem
die Fensterverwaltungseinrichtung (14) derart eingerichtet ist, daß sie Fensterverwaltungsdaten hält, ein Fensterbild wechselt und das Rollen des Fensterbildes sowohl in vertikaler als auch in horizontaler Richtung steuert.

18. Verfahren zum Steuern des Bildrollens bei der Kommunikation zwischen einem ersten und zweiten Terminal mit folgenden Schritten:
Ausstatten des ersten Terminals mit einer ersten Rollbestätigungsmarke, wobei die erste Rollbestätigungsmarke auf "ein" geschaltet ist, wenn eine Möglichkeit des Rollens eines Bildes im ersten Terminal überprüft ist, sowie Ausstatten des zweiten Terminals mit einer zweiten Rollbestätigungsmarke, wobei die zweite Rollbestätigungsmarke auf "ein" geschaltet ist, wenn eine Möglichkeit des Rollens eines Bildes im zweiten Terminal überprüft ist;
Entscheiden im ersten Terminal, ob ein Rollen eines Bildes im ersten Terminal möglich ist, wenn eine Anforderung zum gleichzeitigen Rollen von Bildern im ersten und zweiten Terminal beim ersten Terminal eingeht und Einschalten der ersten Rollbestätigungsmarke sowie Senden einer Rollbestätigungsanforderung vom ersten Terminal an den zweiten Terminal;
Entscheiden des Inhaltes der zweiten Rollbestätigungsmarke im zweiten Terminal, wenn die Rollbestätigungsanforderung empfangen wird;
Rückübermittlung eines Signals "Rollen unmöglich" vom zweiten Terminal an den ersten Terminal, wenn die zweite Rollbestätigungsmarke eingeschaltet ist;
Entscheiden im zweiten Terminal, ob ein Rollen des Fensters im zweiten Terminal möglich ist oder nicht, wenn die zweite Rollbestätigungsmarke ausgeschaltet ist;
Rückübermittlung eines Signals "Rollen unmöglich" vom zweiten Terminal an den ersten Terminal, wenn im zweiten Terminal entschieden wird, daß das Rollen unmöglich ist;
Durchführung des Rollens eines Bildes im zweiten Terminal, wenn dort entschieden wird, daß dies möglich ist;
Rückübermittlung eines Signals "Rollen möglich" vom zweiten Terminal an den ersten Terminal, wenn im zweiten Terminal entschieden wird, daß das Rollen möglich ist; und
Durchführung des Rollens des Bildes im ersten Terminal.

19. Verfahren zum Steuern des Bildrollens nach Anspruch 18, bei welchem
in Entscheidungseinrichtungen des ersten und zweiten Terminals eine Entscheidung erfolgt, ob ein Rollen an der unteren Grenze des Fensterbildes möglich ist oder nicht.

## Revendications

1. Système de communication multifenêtre dans lequel des premier et second terminaux sont agencés pour réaliser une communication, chaque terminal comprenant :
un moyen d'entrée (10) pour entrer des commandes d'exécution de fonction ;
un moyen de contrôle (11) pour analyser et exécuter une commande entrée par ledit moyen d'entrée et une commande émise depuis un terminal à distance sur un terminal local ;
un moyen d'affichage (12) pour afficher une pluralité de fenêtres incluant une fenêtre de communication utilisée pour une télécommunication entre les premier et second terminaux et une fenêtre locale utilisée seulement dans le premier terminal, sous le contrôle dudit moyen de contrôle ;
un moyen d'émission et de réception (13) pour émettre et recevoir une information associée à ladite fenêtre de communication entre les premier et second terminaux, sous le contrôle dudit moyen de contrôle ; et
un moyen de gestion de fenêtre (14) pour gérer une fenêtre en utilisant l'information reçue depuis le terminal à distance par ledit moyen d'émission et de réception,
dans lequel :
ledit moyen d'émission et de réception (13) du terminal local est agencé pour émettre une requête sur le second terminal pour démarrer une télécommunication pour ainsi réaliser une télécommunication entre les fenêtres de communication des premier et second terminaux.

2. Système de communication multifenêtre selon la revendication 1, dans lequel :
ledit moyen d'émission et de réception (13) est agencé pour émettre et recevoir des données de fenêtre incluant des identificateurs de fenêtre des fenêtres de communication des premier et second terminaux pour réaliser une télécommunication entre les fenêtres de communication correspondant aux identificateurs de fenêtre.

3. Système de communication multifenêtre selon la revendication 2, dans lequel :
ledit moyen d'émission et de réception (13) est agencé pour émettre et recevoir des signaux sur et depuis l'autre terminal sous le contrôle dudit moyen de contrôle (11), lesdits signaux désignant une fenêtre à utiliser pour une communication entre les premier et second terminaux au moyen d'un identificateur de fenêtre.

4. Système de communication multifenêtre selon la revendication 2, dans lequel :
ledit moyen d'émission et de réception (13) est agencé pour émettre et recevoir des signaux sur et depuis l'autre terminal sous le contrôle dudit moyen de contrôle (11), lesdits signaux désignant une fenêtre à utiliser pour une communication entre les premier et second terminaux en utilisant une adresse mémoire.

5. Système de communication multifenêtre selon la revendication 2, dans lequel :
ledit moyen de gestion de fenêtre (14) est agencé pour maintenir des données de gestion de fenêtre, pour modifier un cadre de fenêtre et pour contrôler un défilement d'un écran de fenêtre à la fois suivant la direction verticale et la direction horizontale.

6. Système de communication multifenêtre selon la revendication 2, dans lequel :
ledit moyen d'émission et de réception (13) du second terminal est agencé pour permettre une recherche d'une fenêtre du second terminal en réponse à la requête provenant du premier terminal afin de démarrer une télé-écriture et pour retourner une réception d'un signal de télécommunication sur le premier terminal en utilisant un identificateur de fenêtre de la fenêtre recherchée en tant que paramètre, lorsque ladite fenêtre a été trouvée, et pour émettre et recevoir une information d'image visuelle entre les premier et second terminaux.

7. Système de communication multifenêtre selon la revendication 2, dans lequel :
ledit moyen d'émission et de réception (13) du second terminal est agencé pour permettre une recherche d'une fenêtre du second terminal en réponse à la requête provenant du premier terminal afin de démarrer une télécommunication et pour retourner un signal "accusé de réception de télécommunication" en utilisant une adresse mémoire de la fenêtre recherchée en tant que paramètre sur le premier terminal lorsque ladite fenêtre a été trouvée puis pour émettre et recevoir une information d'image visuelle entre les premier et second terminaux.

8. Système de communication multifenêtre selon la revendication 2, dans lequel :
ledit moyen d'émission et de réception (13) du premier terminal est agencé pour produire une requête pour démarrer une télécommunication et une requête pour rechercher une fenêtre, ces requêtes étant envoyées sur le second terminal et étant mises en oeuvre indépendamment l'une de l'autre, et un identificateur de fenêtre de la fenêtre recherchée au moyen de la. requête de recherche et une information d'image visuelle sont émis et reçus, lors de l'utilisation du système de communication, entre les premier et second terminaux.

9. Système de communication multifenêtre selon la revendication 2, dans lequel :
ledit moyen d'émission et de réception (13) du premier terminal est agencé pour produire une requête pour démarrer une télécommunication et une requête pour rechercher une fenêtre, ces requêtes étant envoyées sur le second terminal et étant mises en oeuvre indépendamment l'une de l'autre, et une adresse de fenêtre de la fenêtre recherchée au moyen de la requête de recherche et une information d'image visuelle sont émises et reçues, lors de l'utilisation du système de communication, entre les premier et second terminaux.

10. Système de communication multifenêtre selon la revendication 1, dans lequel :
un moyen d'émission et de réception (13) est prévu et est agencé pour émettre et recevoir des signaux entre les fenêtres de communication des terminaux local et à distance de manière à contrôler indépendamment la pluralité de fenêtres de communication sur les terminaux local et à distance en affichant des documents respectivement communs aux terminaux local et à distance sous le contrôle dudit moyen de contrôle.

11. Système de communication multifenêtre selon la revendication 10, dans lequel :
un moyen de gestion de fenêtre (14) est prévu et est agencé pour maintenir des données de gestion de fenêtre, pour modifier un cadre de fenêtre et pour contrôler un défilement simultané de paires de fenêtres de communication des terminaux local et à distance, où des paires de fenêtres de communication affichent des documents communs de telle sorte que chacun des terminaux local et à distance affiche la même partie des documents communs au niveau de la partie supérieure gauche de chaque fenêtre de la paire de fenêtres de communication, ledit défilement simultané étant mis en oeuvre indépendamment d'autres paires de fenêtres de communication sous le contrôle desdites données de gestion de fenêtre et dudit moyen de contrôle.

12. Système de communication multifenêtre selon la revendication 10, dans lequel :
ledit moyen d'émission et de réception (13) est agencé pour émettre et recevoir des signaux sur et depuis l'autre terminal sous le contrôle dudit moyen de contrôle (11), lesdits signaux désignant une fenêtre à utiliser pour une communication entre les premier et second terminaux au moyen d'un identificateur de fenêtre.

13. Système de communication multifenêtre selon la revendication 10, dans lequel :
ledit moyen d'émission et de réception (13) est agencé pour émettre et recevoir des signaux sur et depuis l'autre terminal sous le contrôle dudit moyen de contrôle (11), lesdits signaux désignant une fenêtre à utiliser pour une communication entre les premier et second terminaux en utilisant une adresse mémoire.

14. Système de communication multifenêtre selon la revendication 10, dans lequel :
ledit moyen de gestion de fenêtre (14) est agencé pour maintenir des données de gestion de fenêtre, pour modifier un cadre de fenêtre et pour contrôler un défilement d'un écran de fenêtre à la fois suivant la direction verticale et la direction horizontale.

15. Système de communication multifenêtre selon la revendication 1, dans lequel :
ledit moyen d'entrée (10) est agencé pour entrer des commandes pour une modification de cadre et un défilement d'écran ;
ledit moyen de gestion de fenêtre (14) est agencé pour modifier un cadre de fenêtre et pour contrôler un défilement simultané de la fenêtre de communication des terminaux local et à distance qui affiche un document commun de telle sorte que chacun des terminaux local et à distance affiche la même partie du document commun en un point prédéterminé de chacune des fenêtres de communication ; et
dans lequel :
le terminal local est agencé pour interroger le terminal à distance pour lui demander si oui ou non un défilement de la fenêtre de communication du terminal à distance peut être réalisé et pour réaliser un défilement de la fenêtre de communication des terminaux local et à distance lorsque le terminal local reçoit une réponse consistant en ce que le défilement de la fenêtre de communication du terminal à distance peut être réalisé.

16. Système de communication multifenêtre selon la revendication 15, dans lequel :
ledit moyen de gestion de fenêtre (14) est agencé pour maintenir des données de gestion de fenêtre, pour modifier un cadre d'une fenêtre selon un cadre à discrétion présentant une largeur inférieure à celle du cadre du document et pour défiler un écran de fenêtre sous le contrôle dudit moyen de contrôle (11).

17. Système de communication multifenêtre selon la revendication 15, dans lequel :
ledit moyen de gestion de fenêtre (14) est agencé pour maintenir des données de gestion de fenêtre, pour modifier un cadre de fenêtre et pour contrôler un défilement d'un écran de fenêtre à la fois suivant la direction verticale et la direction horizontale.

18. Procédé de contrôle d'un défilement d'écran de fenêtre lors d'une communication entre des premier et second terminaux, comprenant les étapes constituées par :
le fait de munir le premier terminal d'un premier indicateur de confirmation de défilement, le premier indicateur de confirmation de défilement étant établi dans l'état "activé" lorsqu'une possibilité de défilement d'un écran dans le premier terminal est en train d'être examinée et le fait de munir le second terminal d'un second indicateur de confirmation de défilement, le second indicateur de confirmation de défilement étant établi dans l'état "activé" lorsqu'une possibilité de défilement d'un écran dans le second terminal est en train d'être examinée ;
l'appréciation, au niveau du premier terminal, de si oui ou non un défilement d'un écran dans le premier terminal est possible lors de la réception d'une requête de défilement simultané d'écrans dans les premier et second terminaux au niveau du premier terminal et de l'activation du premier indicateur de confirmation de défilement et l'émission d'une requête de confirmation de défilement depuis le premier terminal sur le second terminal ;
l'appréciation, au niveau du second terminal, du contenu du second indicateur de confirmation de défilement lors de la réception de la requête de confirmation de défilement ;
le retour d'un signal "défilement impossible" depuis le second terminal sur le premier terminal lorsque le second indicateur de confirmation de défilement est activé ;
l'appréciation, au niveau du second terminal, de si oui ou non un défilement de la fenêtre dans le second terminal est possible lorsque le second indicateur de confirmation de défilement est désactivé ;
le retour d'un signal "défilement impossible" depuis le second terminal sur le premier terminal lorsque le défilement dans le second terminal est apprécié comme étant impossible ;
la réalisation, dans le second terminal, d'un défilement d'un écran lorsque le défilement dans le second terminal est apprécié comme étant possible ;
le retour d'un signal "défilement possible" depuis le second terminal sur le premier terminal lorsque le défilement dans le second terminal est apprécié comme étant possible ; et
la réalisation, dans le premier terminal, d'un défilement de l'écran.

19. Procédé de contrôle de défilement d'écran selon la revendication 18, dans lequel :
une appréciation est réalisée dans un moyen d'appréciation desdits premier et second terminaux pour déterminer si oui ou non un défilement est possible au niveau de la limite inférieure de l'écran de fenêtre.
